# EUROPEAN PATENT APPLICATION

(11) **EP 4 787 367 A1**
(43) Date of publication of application: **05.08.2026**
(21) Application number: 26154779.8
(22) Date of filing: 28.01.2026
(51) Int. Cl.: G10L 15/22, G06F 40/174, G06F 3/16, G10L 15/26

(54) **FIELD NARRATION FOR USER INTERFACE**

(30) Priority: 31.01.2025 US 202519043296
(71) Applicant: Intuit Inc., Mountain View, CA 94043 (US)
(72) Inventor: SYED, Waseem Akram, Mountain View, 94043 (US); KUNINTI, Nishanth Reddy, Mountain View, 94043 (US)
(74) Representative: D Young & Co LLP

(57) **Abstract**

Certain aspects of the disclosure provide systems and methods for field narration. For example, field narration may be configured to populate and verify a form populated based on audio data. A user interface may send a verification request for the form, including a data field and a value to be verified to a field narrative service. The field narrative service may determine relevant portions of the audio data and the transcript for the value to be verified. The user interface may play the portion of audio data, and display the transcription for verification.

## Description

### FIELD AND BACKGROUND

Aspects of the present disclosure relate to techniques for handling audio and video data, including, for use with user interfaces.

Various assistive technologies exist to improve functional capabilities of individuals with disabilities. For example, individuals with visual impairments may utilize technologies such as text-to-speech and speech-to-text to read and write. Text-to-speech technologies may scan written text or visuals, such as documents, computer screens, text messages, and the like, and play the text aloud as spoken audio. Speech-to-text technologies operate in reverse, by recording audio and translating the spoken words into text.

Other individuals may utilize these technologies, for example, those with reading difficulties, language barriers, or for convenience. A familiar example is in motor vehicles equipped to read out text-based information and to listen for driver commands. For example, with text-to-speech technology a vehicle may read out caller ID or a text message through the vehicle's sound system. Similarly, the driver may dictate a text message through a microphone associated with the vehicle to be transformed into text and sent as a message.

Conventional text-to-speech and speech-to-text technologies translate the literal words written or spoken between formats. For example, the text generated by a speech-to-text technology may be a transcript, or text embodying the literal words spoken. This may lead to difficulties with natural human speech. For example, homophones may be challenging for speech-to-text technologies. A homophone is a word that sounds the same as another word but has a different meaning, and sometimes a different spelling. For example, "two", "too", and "to" are homophones with different meanings. "Two" references the number 2, while "too" means also, and "to" is a preposition. Spoken, each of these words sounds the same, but each has different meanings and spellings. Thus, the speech-to-text technology needs to differentiate between which word is used, for example, based on the context, and still sometimes may transcribe the incorrect word in the transcript.

A similar technical challenge for text-to-speech technologies are heteronyms. Heteronyms are words that have the same spelling, but are pronounced differently based on meaning or usage. For example, "wind" can be used as a noun to mean moving air and may be pronounced "wihnd," while used as a verb to mean to twist or turn and may be pronounced "wynd." Other challenges may include slang, accents, or other pronunciation variations.

### SUMMARY

Certain aspects provide a method, comprising: receiving, from a user via a user interface (UI), a verification request for a form populated based on audio data, wherein the verification request comprises: a data field of the form; and a value for filling the data field; determining an portion of the audio data associated with the value; determining a transcript portion corresponding to the audio portion; sending, to an audio player associated with the UI for audio playback, the portion; and sending, to the UI for display, the transcript portion.

Certain aspects provide a method, comprising: receiving, from a user via a user interface (UI), a verification request for a form filled based on audio data and displayed on the UI, wherein the form comprises: a set of data fields; and a set of values, each value of the set of values filling a data field of the set of data fields; determining a set of audio portions of the audio data, each audio portion of the set of audio portions associated with each value of the set of values; determining a set of transcript portions, each transcript portion of the set of transcript portions corresponding to an audio portion of the set of audio portions; sending, to an audio player associated with the UI, the set of audio portions; and sending, to the UI for display, the set of transcription portions.

Certain aspects provide a method, comprising: displaying, on a user interface (UI): a fillable form comprising a set of data fields and a set of values, wherein each value of the set of values is associated with a data field of the set of data fields; an audio recording function configured to receive audio data; and an audio playing function configured to play audio portions; receiving, from a user via the audio recorder, the audio data comprising information for populating the fillable form; populating the fillable form based on the information; receiving a verification request for the fillable form; receiving a set of audio portions of the audio data, each audio portion of the set of audio portions associated with a respective value of the set of values; receiving a set of transcript portions, each transcript portion corresponding to a respective audio portion of the set of audio portions; and playing with the audio player function, the set of audio portions; and while playing, displaying, on the UI, the set of transcript portions.

Other aspects provide processing systems configured to perform the aforementioned methods as well as those described herein; computer-readable media comprising instructions that, when executed by a processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example field narration system.
**FIG. 2** depicts an example workflow for field narration for a user interface.
**FIGS. 3A-3D** depict a set of example user interfaces of a field narration system.
**FIGS. 4A-4D** depict another set of example user interfaces of a field narration system.
**FIG. 5** depicts an example method for field narration for a user interface.
**FIG. 6** depicts another example method for field narration for a user interface.
**FIG. 7** depicts an example method for a user interface using a field narration service.
**FIG. 8** depicts an example processing system with which aspects of the present disclosure can be performed.
**FIG. 9** depicts another example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums with instructions for audio-based data assistive techniques configured for verification of audio and video data, including, for use with dynamic user interfaces.

As described herein, conventional audio-based data assistive technologies have challenges due to the peculiarities of language, for example, homophones, heteronyms, accents, dialects, slang or other informal language. Additionally, audio-based data assistive technologies may have difficulties due to quality, volume, or noise in the audio recording.

One way to verify the accuracy of technologies is to listen to the audio data to verify the audio matches the text. For example, a speech-to-text technology may be verified by listening to the audio data, e.g., the "speech" part, and comparing it to the written text, e.g., the "text" part. Similarly, a text-to-speech technology may be verified by reading the written text, e.g., the "text" part, and comparing it to the audio data, e.g., the "speech" part.

However, such verification may be inefficient and time consuming because conventionally the entire audio data is played. For long audio clips, this may take considerable time, as well as resources for obtaining, processing, and playing the audio data. Additionally, a user may advance the audio to a section where the portion to be verified is played, e.g., skipping ahead to a specific time point of the audio data. The audio player may buffer or otherwise delay audio playback. Further, advancing options may be imprecise, cutting off portions of the relevant audio, or including extraneous portions. The user may end up listening, skipping ahead, listening, skipping back, or otherwise navigating through the audio data to find a relevant portion.

Additionally, a user (or verification system) would also need to know the time point of the relevant audio. For a long audio clip, the user may jump around to several points of the audio clip to find the relevant audio. Even with a corresponding transcript of the audio, the user may guess and check, by guessing, based on where the relevant text portion is compared to the rest of the text, where the relevant audio portion is compared to the rest of the audio, and then playing that portion to determine if it is in fact, the relevant audio portion. This may be time consuming and frustrating for users, and may result in users failing to verify the audio or not using the audio tool.

Another challenge may occur where the text to be verified is not a literal transcription (e.g., exactly the words spoken in the audio). For example, a user may indirectly provide information, such that there is not a specific spoken word matching the text to be verified. In response to a prompt to provide a user's age, the user says, "I was born in 1999." By this, it can be inferred that the user is 26, e.g., between the years 1999-2025. However, when verifying the user's age, the relevant audio portion does not use the term age. Thus, even searching through a text transcript to find "age" would not provide the relevant portion.

Further, where there are several sections of text and audio data, the user would repeat this process several times to individually verify each section against the corresponding audio data. In some examples, the sections of text may not be in the same order as the audio data. For example, for a form filled based on audio data, a first data field may be for a user's age and a second data field may be for the user's name. The audio data may be "my name is Tom and I was born in 1999." The first audio section, e.g., "my name is Tom" relates to the second data field, and the second audio section, e.g., "I was born in 1999" relates to the first data field. The user would navigate past the first audio section to verify the first data field, and then repeat the audio to verify the second data field. There is inefficiency in loading, navigating, and listening to the audio repeatedly for each section. For long audio clips and/or lengthy and complex text, the verification process may become tedious and ineffective. Furthermore, the entire audio clip would be processed, loaded, buffered, and played as the user navigates between sections.

Aspects of the present disclosure overcome these technical limitations of conventional audio-based data assistive technologies and provide improved user interface and experience for handling and verification of audio data. Specifically, certain aspects provide for automated audio-based data handling to isolate relevant portions of audio data for verification of text information generated based on the audio data. For example, aspects include a dynamic user interface configured to automatically identify relevant portions of audio data for verification of text information and play the relevant portion of the audio data for user, thereby enabling verification of the audio-based information. Further, in some aspects, the dynamic user interface may display a text transcript associated with the audio portion (e.g., a literal audio caption of the spoken words of the audio), enabling verification of the transcript associated with the text information. For example, a field narration system may provide the portion of audio data relevant to the text information for verification, as well as a transcript of the portion of audio data on a user interface to enable verification of the text information.

In some aspects, a field narration system may be used for structured documents containing text information. Structured data is data organized into a useable format, such that it may be used for further analysis, reporting, and/or storage, among other tasks. Structured data may be contained in structured documents, which may have a predefined format in which data is organized in a consistent way making it easy to store, search for, and/or extract. Example structured documents may include forms (e.g., such as electronic forms), spreadsheets, JavaScript Object Notation (JSON) objects, extensible markup language (XML) documents, and more. Unstructured documents, in contrast, may lack a pre-defined structure or format. For example, data included in an unstructured document may not follow any specific template and/or schema.

Unstructured documents may include a variety of data types (e.g., such as text, images, multimedia, etc.), and often include content that is free-form or narrative. Data included in unstructured documents may be referred to herein as "unstructured data." Example unstructured documents may include letters, memos, or essays, other free form documents, images, audio files, video files, social media posts, emails, and more. For example, humans often speak in unstructured, or narrative format, . Structured documents may be easier to categorize and search as compared to unstructured documents, which may require more complex analysis techniques to extract meaningful information.

Structured documents pose several challenges for audio-based data assistive technologies. For example, consider a form (an example of a structured document) consisting of multiple data fields, or designated spaces for entering or selecting specific data (e.g., values). Forms are often associated with templates, which provide the pre-defined structure or layout that organizes the data fields within the form. In other words, a form template may be a blueprint for creating a particular form, ensuring consistency, standardization, and/or efficiency in data collection. Forms may be physical or electronic. Form population refers to a process for entering information into a form, such as by populating in one or more fields of the form with pre-existing data.

In certain aspects, a form may be populated based on audio data, for example, based on a transcription of audio data. As described, however, humans often speak in a narrative or unstructured format, especially relative to a form. For example, audio data of a user speaking may contain information for populating the form, but not directly corresponding to the data fields of the form. For example, a user may say information for populating the form, but not in the order or structure of the form. Thus, information at the end of the audio clip may be relevant to a data field at the top of the form. Accordingly, aspects described herein utilize a transcription of the audio data to identify the values for the form, and populate the form.

Further, aspects described herein may be used to verify the form populated based on audio data. For example, a user interface may be configured to send a verification request based on a user input, to verify a value for a data field populated based on audio data. In response to a verification request, the field narration service may determine a relevant portion of the audio data, that is, a portion of the audio data conveying the value used to populate the data field. A transcript portion, comprising an audio caption, or the words spoken in the portion of the audio data, may further be determined. Together, the portion of audio data and portion of the transcript may be displayed on a user interface for user verification.

Thereby, a user may directly verify the value, the portion of audio data used to populate the value, as well as a transcript of the portion of audio data to ensure validity and accuracy of the value. Furthermore, the portion of the audio data may contain only the section or portion of the audio data conveying the information for the value, that is, not contain excess or unnecessary audio data. For example, the user interface is configured to automatically start playing the audio data precisely where the audio relevant to the value begins, and stop when the relevant portion ends. Thus, the user need not navigate, seek, skip, or otherwise try to find the relevant portion of the audio data for verification. Similarly, a transcript portion corresponding to the audio data may be displayed to enable verification of the transcription.

Further, by limiting the audio data and transcription data to only the portions corresponding to the value, extraneous audio data and transcription data is not sent to the user interface for display, processed, or stored in a memory of the user device. Thus, the verification process may be more efficient due to less data processing and storage.

Additionally, in certain aspects, a verification request may be for a set of data fields and values of the form, for example, the whole form, or a section of the form. The user interface may be configured to play the portion of audio data and display the transcript for each data field and value, in turn, navigating to the start point of the relevant audio data, and playing until the end point of the relevant audio data, limiting the audio data to only the relevant audio. Further, the user interface may verify each data field and value, in turn, navigating to the relevant audio data for that data field and value, even if the audio data is in a different order. For example, for a first data field and value, the relevant audio may be towards the end of the audio data, and for a second data field and value, the relevant audio may be towards the beginning of the audio data. The user interface automatically seeks to the relevant audio for each data field and value, e.g., for the first data field and value, towards the end, and then back to the beginning for the second data field and value without requiring the user to navigate between sections, play the entire audio data, or repetitively play sections of the audio data in order to verify each data field and value.

Further, in some aspects, a visual indicator may be displayed while the value is verified. For example, while the audio data portion corresponding to the first value is played, and the transcript portion corresponding to the audio data portion is displayed, a visual indicator associated with the first value may be displayed. A highlighted element, an icon, a box, a color change, or other visual cue on the user interface may indicate as to which value the audio data portion corresponds, enabling the user to precisely verify the corresponding value with the audio data portion and the transcript portion.

### Example System for User Interface Field Narration

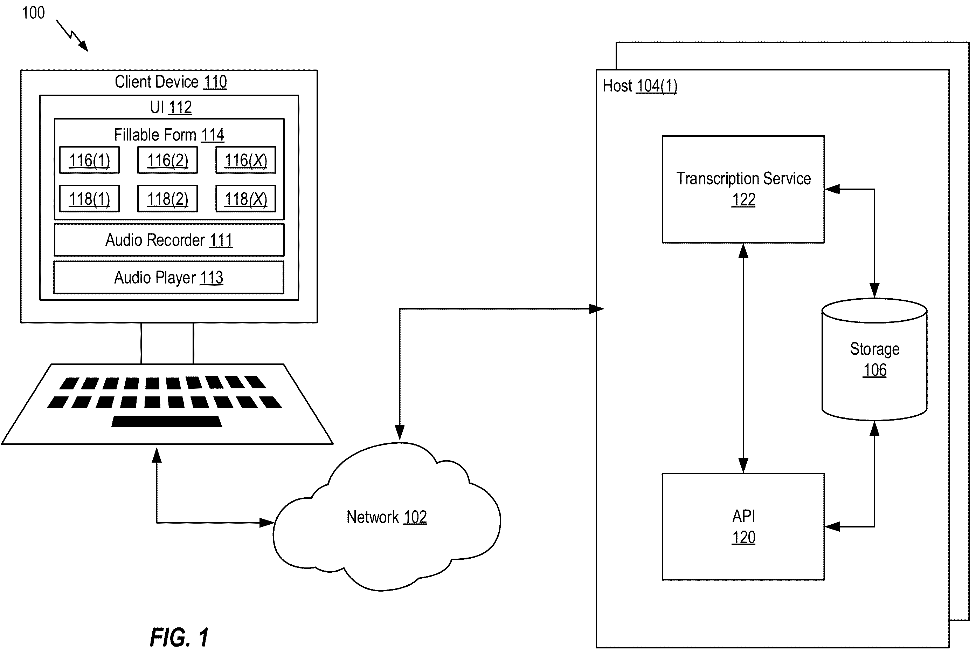

**FIG. 1** depicts an example system 100 for a user interface for audio data-based field narration, including verification of audio-based form population. In this example, system 100 utilizes a field narration service implemented as a software-defined service (in some cases, a cloud-native software-defined services) for audio and visual verification of a form populated based on audio data. Specifically, in this example, the AI field narration service is implemented as an API, referred to herein as API 120, however, other services are possible. For example, AI field narration service may be implemented as a microservice, and may be deployable as part of, integrated with, coupled to, or otherwise configured to function with an application. It should be understood that the components of system 100 depicted in **FIG. 1** and described herein are merely examples and systems with additional, alternative, and/or a fewer number of components may be considered within the scope of this disclosure.

In the example depicted in **FIG. 1****,** system 100 comprises a client device 110 and host(s) 104 interconnected through a network 102. Network 102 may be, for example, a direct link, a local area network (LAN), a wide area network (WAN), such as the Internet, another type of network, or a combination of one or more of these networks.

Host(s) 104 may be geographically co-located servers on the same rack or on different racks in any arbitrary location in a data center. Host(s) 104 may be constructed on a server grade hardware platform and include components of a computing device such as, one or more processors (central processing units (CPUs)), one or more memories (random access memory (RAM)), one or more network interfaces (e.g., physical network interfaces (PNICs)), storage 106, and other components (e.g., only storage 106 is shown in **FIG. 1****).**

A first host 104(1) in system 100 may host a plurality of services, including API 120, and at least one service, in this example, transcription service 122. The services may be deployed using virtual machines (VMs) and/or container(s) running on first host 104(1) (e.g., where first host 104(1) is running a hypervisor (not shown) used to abstract processor, memory, storage, and networking resources of first host 104(1)'s hardware platform).

Although depicted here as hosted on first host 104(1), one or more of the services may be hosted on a separate host e.g., host(X). In some aspects, one or more of the services may be hosted on a different data center, and connected to host 104(1) and/or client device 110 through network 102. In some examples, communication between the transcription service 122 and the API 120 may be facilitated by one or more additional APIs.

Client device 110 may each include a user interface (UI) 112 which may be used to communicate with, at least, the API 120 using the network 102. In some examples, communication between client device 110 and the API 120 may be facilitated by one or more additional APIs. Examples of client devices 110 may include a smartphone, a personal computer, a tablet, a laptop computer, and/or other devices.

The UI 112 further includes a display of a form 114. The form comprises one or more data fields 116(1)-(Y) (collectively referred to herein as "data fields 116"), where *Y* is an integer greater than one, and one or more values 118(1)-(Z) (collectively referred to herein as "values 118"), where Z is an integer greater than one. Each data field of the set of data fields 116 of form 114 is associated with one value of the set of values 118. Although described herein as a form, the form 114 may comprise any structured document with a data field and a value, where the value may be populated with data obtained from audio data.

Further, the client device 110 includes an audio recorder 111 configured to capture audio (e.g., sound). The audio recorder 111 may comprise a microphone or other device configured to capture audio (e.g., sound), and record the audio as digital audio data. Although depicted as part of client device 110, the audio recorder 111 may be a separate device in data communication with the client device 110, for example, an external microphone. Further, in some aspects, the UI 112 includes an element configured to operate the audio recorder 111 to capture audio through the audio recorder 111 (e.g., a recording element).

The client device 110 includes an audio player 113 configured to play audio (e.g., as sound) from digital audio data. The audio player 113 may comprise a speaker or other device configured to play audio (e.g., sound), stored as digital audio data. Although depicted as part of client device 110, the audio player 113 may be a separate device in data communication with the client device 110, for example, an external speaker. Further, in some aspects, the UI 112 includes an element configured to operate the audio player 113 to play audio through the audio player 113 (e.g., a playing element).

In some aspects, and as described further herein, the API 120 may be configured to utilize audio data (e.g., captured by an audio capture device), and populate form 114 by populating the value(s) 118 associated with the data field(s) 116 of the form based on information captured in the audio data. For example, the API 120 may be configured to utilize transcription service 122 to generate, based on the audio data, a transcription of the audio data for population of the form 114. The transcription may be used to determine values 118 for data fields 116 of the form 114.

Transcription service 122 may be configured, in some aspects, to generate a transcription array comprising the transcript of the audio data, as well as information for populating form 114. For example, a transcription array may comprise an indicator of the data field (e.g., data field 116(1)) of the form 114; the value (e.g., value 118(1)) for populating the data field of the form 114; a transcript of the audio data comprising a set of words associated with the value 118(1); and a set of timestamps, wherein each timestamp of the set of timestamps is associated with each word of the set of words. For example, transcription service 122 may be configured to utilize natural language processing (NLP) techniques to generate the transcription array.

API 120 may be configured to determine an audio data portion of the audio data containing the information for the value 118(1) to populate the data field 116(1). The audio data portion may comprise the portion or section of the audio data in which the user speaks the information, for example, one or more words conveying the information.

API 120 may be further configured to determine a transcript portion of the transcript of the audio data corresponding to the audio data portion. The transcript portion may comprise the portion or section of the transcript conveying the text of the user speaking the information, e.g., text of one or more words conveying the information.

In some aspects, the API 120 may be configured to determine an audio data portion and a transcript portion for each value of the set of values 118 of the form 114, or a subset of the values 118 of the form 114.

In response to a verification request, such as sent through the UI 112, the API 120 may send the audio data portion and the transcript portion to the UI 112 to verify the value, e.g., value 118(1), for the data field, e.g., data field 116(*Y*). In some aspects, the verification request is for the set of values 118 of the form 114, or a subset of the values 118 of the form 114, and the API 120 may send a set of audio data portions and corresponding transcript portions to the UI 112 to verify each value of the set or subset of values 118. For example, the API 120 may send data to the UI 112 for display, such as in a JSON, a Fuego Response Format (FrF), or the like.

In some aspects, the API 120 may further be configured to determine a visual indicator, or set of visual indicators, associated with the data field and value, or set of data fields and values, to be verified, and send the visual indicator(s) to the UI 112 for display.

The UI 112 may then play the audio data portion using the audio player 113 to enable verification of the value 118(*Z*). The UI 112 may display the transcript portion, for example, as a text element on the UI 112. In some aspects, the UI 112 may further display the visual indicator associated with the value 118(*Z*) and/or the data field 116(*Y*) to be verified.

In some aspects, such as where the verification request is for a set of values 118 (or subset of values), the UI 112 may then play, through the audio player 113, each audio portion corresponding each value of the set of values 118. Simultaneously, while playing on the audio player 113, the UI 112 may display the transcript portion corresponding to each audio portion. In some aspects, a visual indicator may be displayed with each value of the set of values 118, while the audio data portion corresponding to that value is played through the audio player 113, and the transcript portion corresponding to the audio data portion is displayed on the UI 112.

Beneficially, the audio player 113 is configured to automatically play the audio data portion corresponding to the value 118(*Z*) to be verified. That is, the audio data portion only contains the portion of the audio data conveying the information for the value 118(*Z*) . Thus, a user need not seek, advance, skip, or otherwise manually manipulate the audio data to find and play the audio data portion. Further, the corresponding transcript portion is also displayed, allowing the user to verify the audio data and the transcript data used to populate the form 114, without navigating through the audio data, or transcript. For lengthy audio data, this may save the user time manually searching through audio and transcript data. Furthermore, the client device 110 only receives the pertinent data, e.g., no extraneous audio or transcript data, for verification, reducing processing time and volume, as well as reducing any buffering or loading of the data.

Additionally, in some aspects, such as where a set of values 118 is to be verified, the audio player 113 is configured to automatically play each audio data portion corresponding to each value to be verified. For example, the audio data portion corresponding to value 118(1) is played, and the audio player 113 may automatically seek to the audio data portion corresponding to value 118(2) and play that audio data portion. Thus, the user does not need to navigate between audio data portions, for example, going back and forth between sections of the audio data to find the relevant audio data for verifying the values. For example, the first value 118(1) may be associated with an ending portion of the audio data, while the second value 118(2) is associated with a starting portion of the audio data. The audio player 113 may automatically seek to the ending portion and play the ending portion when verifying the first value 118(1), then seek back to the starting portion to verify the second value 118(2) without user input, navigation, or delay.

Furthermore, the transcript portion corresponding to each audio data portions, e.g., for the first value 118(1) and the second value 118(2), may be displayed while the audio data portion is played by audio player 113. In some aspects, a visual indicator may be displayed while the value is verified. For example, while the audio data portion corresponding to the first value 118(1) is played, and the transcript portion corresponding to the audio data portion is displayed, a visual indicator associated with the first value 118(1) may be displayed. A highlight element, an icon, a box, a color change, or other visual cue on the UI 112, to indicate as to which value 118(1) the audio data portion corresponds. Thus, beneficially, the user may precisely verify the corresponding value with the audio data portion and the transcript portion.

### Example Workflow for Field Verification

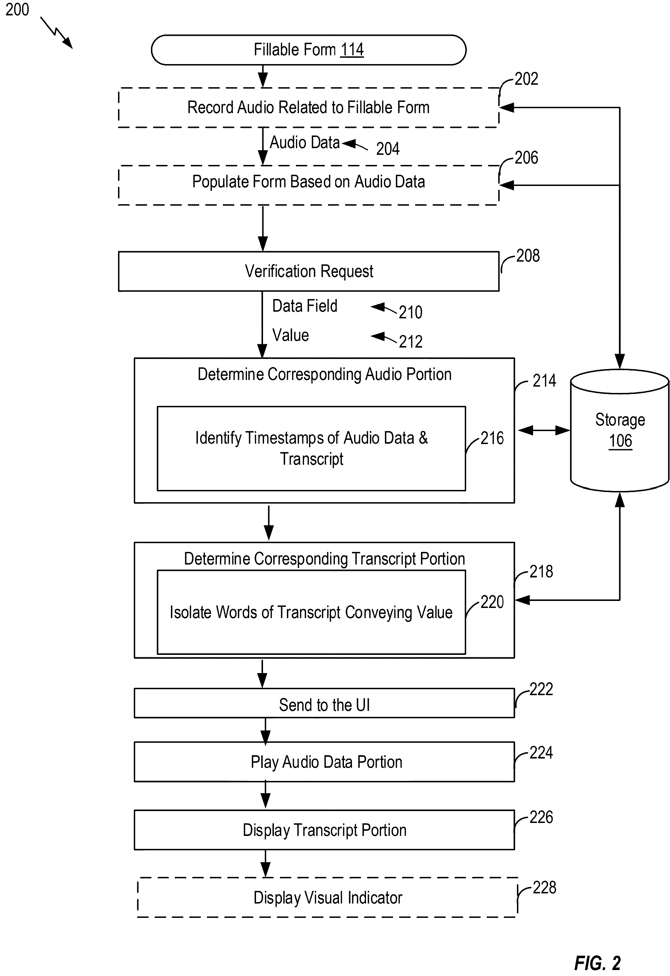

**FIG. 2** depicts an example workflow 200 for verification of one or more data fields of a form filled based on audio data, using system 100 described in **FIG. 2****.** Specifically, workflow 200 may be used to verify textual data extracted from audio data used to populate an electronic form (e.g., form 114 in **FIG. 1****)** based on the extracted textual data. It is noted that various types of electronic forms may be populated, for example, an electronic contact information form, an electronic tax form, an electronic health form, an electronic invoice, an electronic bill, and/or other electronic form types. Further, although workflow 200 describes the verification of a form populated based on audio data, in some aspects, the audio data may be associated with a video, for example, video data containing both image and audio data.

Initially, a fillable form (e.g., form 114 in **FIG. 1****)** is identified, for example, based on a form displayed on the client device 110 displaying UI 112. In some aspects, the form 114 may be identified based on an identifier indicating the form to be populated and verified.

At step 202, optionally, audio data 204 for populating the form 114 is recorded, for example, through an audio capture device associated with the client device 110 displaying the UI 112. In some aspects, the audio data 204 may be recorded via an audio capture device associated with a user device (e.g., client device 110), for example, through a microphone, through a camera, and/or the like. In some aspects, the audio data 204 may be stored in storage 106.

In some aspects, the UI 112 may display a recording function element, for example, audio recorder 111, configured to receive user input to record the audio data 204. For example, a user may select the recording function element and record, through an audio capture device associated with the client device 110, the audio data 204.

In some aspects, the audio data 204 is recorded on another device and obtained for processing by workflow 200, for example, by another device connected to system 100 through network 102.

At step 206, optionally, the form 114 is populated based on the audio data 204, for example, based on information conveyed in the audio data 204. In some aspects, a value for a data field of form 114 is determined based on the audio data 204. For example, where the data field is a name data field and the audio data 204 comprises "my name is Thomas Paine," the value for the name data field is determined to be "Thomas Paine", e.g., the speaker's name. Additionally, based on the audio data 204, timestamps may be determined for each word, for example, "my," "name," "is," "Thomas," and "Paine."

In some aspects, the value for the data field of form 114 is stored in a transcription array of the audio data 204, including, an indicator of the data field, the value for populating the data field, a transcript of the audio data, and one or more timestamps associated with the transcript. In some aspects, the transcription service may generate the transcription array based on the audio data 204, for example, by transcribing the audio data 204, determining the value for the data field, and determining one or more timestamps associated with the transcript. For example, in some aspects, the audio data 204 may be transcribed using natural language processing (NLP) techniques. The value for the data field may be determined based on the transcript. In some aspects, the transcription array is stored in storage 106.

For example, a transcription array for the previous example may include, an indicator of the name data field, e.g., data field: name; the value for the data field, e.g., value: Thomas Paine; the transcript of the audio data associated with the value, e.g., "my name is Thomas Paine;" and one or more timestamps associated with the transcript, e.g., end_time: 2.2, and start_time: 1.32. In some aspects, the transcription array may be stored in a structured format, for example, a JSON format. For example, an example transcription array may comprise:

```
 {
  "data": [
    {
      "name": {
        "sentence_info": {
          "sentence_spoken": {
             "end_time": 2.2,
             "start_time": 1.32,
             "transcript": "My name is Thomas Paine "
        },
        "value": "Thomas Paine"
      }
    }
  ]
 }
```

Based on the value, the data field of the form 114 may be populated with the value. Returning to the previous example, the name data field may be populated with the value, "Thomas Paine." In some aspects, populating the form 114 may include populating the value, e.g., value 118, associated with the data field, e.g., data field 116(*Y*), on the UI 112. In some examples, populating the form may include updating an existing value for the data field to the value from the structured contextual outputs. In some cases, the existing value may comprise a null value, or an example value. In some cases, the existing value may be a previously entered value.

At step 208, a verification request is received. In some aspects, a verification request is sent, by the user, through UI 112, for example, by a user selecting a verification element displayed on UI 112. In some aspects, the verification request is received by the API 120.

In some aspects, the verification request indicates the data field 210 and the value 212 to be verified. In some aspects, the data field and the value to be verified are based on selecting a verification element on the UI 112 associated with the data field and/or the value. For example, a verification element displayed near, next to, or otherwise associated with the data field and/or the value.

In another example, a verification element may be part of the data field and/or the value displayed on the UI 112, such as with the data field and/or the value. A user, in an example, may select a populated data field displayed on the UI 112 to send the verification request. In another example, a user may select a value associated with a data field displayed on the UI 112 to send the verification request.

In some aspects, the verification request indicates a set of data fields and corresponding values to be verified. For example, a verification request may indicate to verify the entire form, e.g., all the data fields and corresponding values of the form. In another example, a verification request may indicate to verify a subset of data fields and corresponding values of a form, e.g., a set of data fields and values on a page of a form, a page of the UI, and the like.

In some aspects, a verification field for a verification request associated with a set of data fields may be displayed as part of form 114 on the UI 112, for example, at the end of the form, at the bottom of the UI, and the like.

At step 214, a portion of the audio data 204 corresponding to the value for the data field to be verified is determined. For example, based on the transcription array stored in storage 106, a portion of the audio data 204 containing the information for the value for the data field may be determined. Returning to the previous example, where the data field is the name data field and the value is "Thomas Paine," e.g., the speaker's name, the portion of the audio data 204 corresponding to the value may be the portion of the audio data 204 where the speaker says "my name is Thomas Paine." That is, the portion of the audio data 204 corresponding to the value for the data field comprises the section of audio data containing the information for the value and used to populate the data field.

For example, the audio data 204 may comprise "My name is Thomas Paine. Born in England, I was never content to accept the world as it was given to me. I have spent my life asking questions, challenging norms, and most of all-seeking freedom. Freedom of thought, freedom of expression, freedom from tyranny." The first section of the audio data, e.g., "my name is Thomas Paine," corresponds to the name data field, e.g., it contains the value for the name data field, the speaker's name, whereas the second section, e.g., "Born in England, I was never content to accept the world as it was given to me. I have spent my life asking questions, challenging norms, and most of all-seeking freedom. Freedom of thought, freedom of expression, freedom from tyranny," does not correspond to the name data field, e.g., it contains no information conveying the value for the name data field. Thus, only the first section verifies the name data field, and the second section is extraneous. By isolating the portion of the audio data 204 corresponding to the value to be verified, extraneous audio data is not obtained, played, or verified. Thus, only the portion to be verified is obtained and provided to the UI 112, thereby saving processing and transmission of extraneous data.

In some aspects, at step 216, determining the audio portion of the audio data associated with the value, may comprise determining the one or more words in the transcript array, such as stored in storage 106, identifying a start timestamp of the set of timestamps for a first word in the one or more words in the transcript array; identifying an end timestamp of the set of timestamps for a last word in the one or more words in the transcript array; and isolating, in the audio data, the audio portion consisting of audio data from the start timestamp until the end timestamp.

In some aspects, to determine the portion of the audio data corresponding to the value for the data field to be verified, word(s) of the set of words associated with the value are determined in the transcription array. For example, the value "Thomas Paine" is associated with the words "my name is Thomas Paine" in the transcription array. Then, a start timestamp may be determined to be associated with the first word, for example, "my" in the transcription array, e.g., 1.32. An end timestamp may be determined to be associated with the last word, for example, "Paine" in the transcription array, e.g., 2.2. The audio data between the start timestamp, e.g., 1.32 and the end timestamp, e.g., 2.2 may be isolated as the portion of the audio data corresponding to the value.

In some aspects, such as where the verification request is associated with a set of values to be verified, a portion of audio data may be determined for each value to be verified. For example, for each value of the set of values to be verified, a portion of audio data corresponding to that value may be determined.

Because an audio portion may convey information related to multiple data fields, in some aspects, a portion of audio data may correspond to one or more values. For example, instead of a single name data field for a form, consider a form with a first name data field and a last name data field. The audio data contains "my name is Thomas Paine." The value for the first name data field is "Thomas" and the value for the last name data field is "Paine." The portion of the audio data corresponding to the value of the first name data field is the same portion as corresponding to the value of the last name data field.

In some aspects, a portion of audio data for a first value may overlap with a portion of audio data for a second value. For example, a first audio portion for the first value may consist of audio data from 1.32 to 2.2, while a second audio portion for a second value may consist of audio data from 1.75 to 2.5.

At step 218, a portion of the transcript corresponding to the portion of the audio data corresponding to the value for the data field is determined. In some aspects, at step 220 determining the transcript portion corresponding to the audio portion comprises isolating, the one or more words of the transcript corresponding to the audio portion determined at step 214. Based on the word(s) of the portion of the audio data corresponding to the value, the portion of the transcript may be determined. For example, the transcription array indicates the transcript "my name is Thomas Paine" corresponds to the value of Thomas Paine for the name data field. In some aspects, the portion of the transcript may be identified based on the start and end timestamps of the portion of the audio data.

At step 222, the portion of the audio data and the portion of the transcript are sent to the UI 112, such as for display and/or playing.

In some aspects, a visual indicator associated with the portion of the audio data and the portion of the transcript is also sent to the UI 112 for display. For example, a visual indicator may comprise a UI element associated with a value and/or a data field. A visual indicator may include various UI elements, for example, buttons, icons, bars, pop-ups, notifications, color changes, highlights or outlines, size changes, and the like, which may serve as visual cues to indicate the data field and/or value associated with the portion of the audio data and the portion of the transcript.

At step 224, the UI 112 is configured to facilitate playing of the portion of the audio data, for example, through a speaker associated with client device 110. In some aspects, the UI 112 may display an audio player element on the UI 112, for example, audio playback controls, e.g., start, pause, volume, etc., for playing the portion of the audio data. In some aspects, the portion of the audio data may play automatically in response to the verification request. In some aspects, an audio player element may be displayed in response to the verification request, e.g., for a user to initiate playing of the audio data portion.

For example, the audio data portion may commence playing at the start timestamp, e.g., the first word of the word(s) conveying the value for the data field to be verified, and cease playing at the end timestamp, e.g., the last word of the word(s) conveying the value for the data field to be verified. Thus, the audio data portion conveying the information may be played and directly verified, e.g., by a user listening, however, extraneous audio data is not played. For example, instead of seeking to the relevant portion, or guessing where the relevant portion may be, the audio play may automatically play only the portion conveying the information, by starting playing at the start timestamp and stopping playing at the end timestamp.

In some aspects, such as where the audio data is part of video data, the UI 112 may be further configured to play the video data, e.g., both the image data and the audio data corresponding to the portion of the audio data. For example, the UI 112 may display a video player element and play the video data corresponding to the portion of the audio data, including displaying the portion of the image data and playing, e.g., through an audio playing device, the portion of the audio data.

At step 226, the UI 112 is configured to display the portion of the transcript. In some aspects, the UI 112 may display the portion of the transcript simultaneous to the playing of the portion of the audio data at step 224. For example, the UI 112 may display the text comprising the portion of the transcript. The text may be displayed as an element on the UI 112, for example, a text pop-up, a text window, a text display, and the like.

In some aspects, the text comprising the portion of the transcript may be displayed in conjunction with an audio or video player element. For example, the text transcript may be displayed on the audio or video player element, above the audio or video player element, as a pop-up, window, or display with the audio or video player element. By displaying the text of the portion of the transcript corresponding to the audio data portion, the text may also be verified, without displaying extraneous transcript data, e.g., before and/or after the portion of the transcript corresponding to the audio portion.

At step 228, the UI 112 may optionally be configured to display, on the UI 112, the visual indicator associated with the data field and/or the value for which the portion of the audio data and the portion of the transcript correspond. For example, a visual indicator may highlight, distinguish, appear, or otherwise provide a cue as to the data field and the value to be verified.

In some aspects, such as where the verification request is associated with a set of data fields and corresponding values to be verified, steps 224-226, and optional step 228 may repeat for each data field and corresponding value to be verified of the set. For example, for the first data field and value of the set to be verified, the audio data portion corresponding to the first data field and value may be played, e.g., such as described at step 224, while the transcript portion corresponding to the first data field and value may be displayed, e.g., such as described at step 226. In some aspects, a visual indicator associated with the first data field and the value may also be displayed. In some cases, the audio data portion, the transcript portion, and the visual indicator for the first data field and value may automatically play and display in response to the verification request.

Next, the audio data portion corresponding to the second data field and value to be verified, as well as the corresponding transcript portion, and in some aspects, the visual indicator corresponding to the second data field and value, may be played and displayed after the first data field and value. This may continue for each data field and value of the set to be verified. Beneficially, each data field and value may be verified, by playing the audio data portion and the transcript portion corresponding to the data field and value, without extraneous audio and/or transcript data. Further, a user need not navigate back and forth between the audio data and the values to be verified.

Note that **FIG. 2** is just one example of a workflow, and other workflows including fewer, additional, or alternative operations are possible consistent with this disclosure.

### Example Field Narration User Interfaces

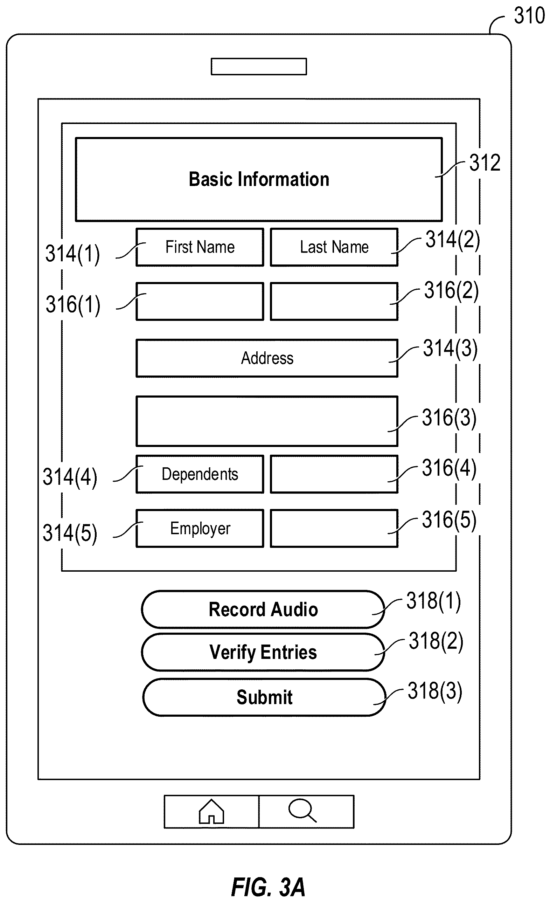

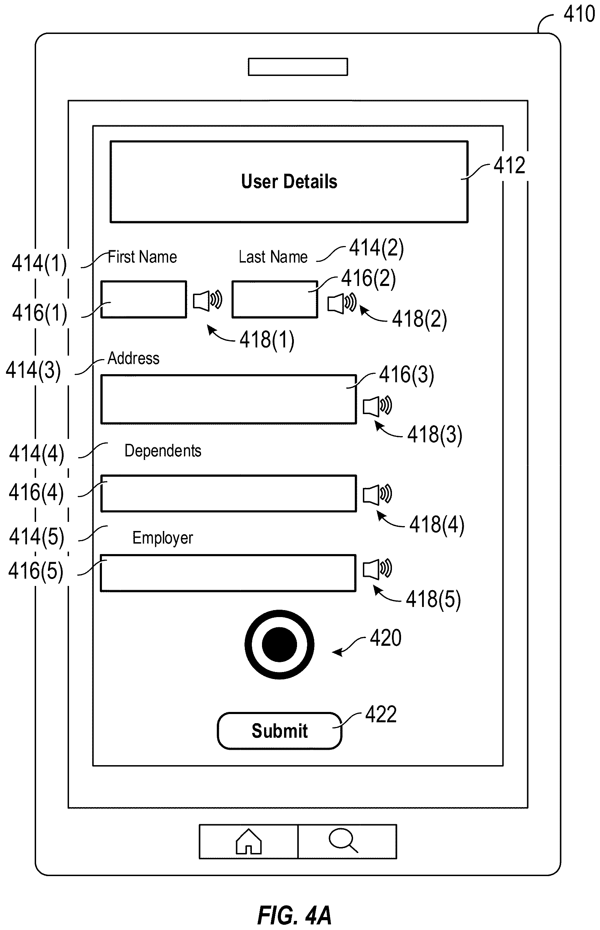

**FIGS. 3A-3D** and **FIGS. 4A-4D** depict various user interfaces implementing field narration, such as described with respect to workflow 200 in **FIG. 2****.**

Specifically, **FIGS. 3A-3D** depict various user interfaces for population and verification of a form 312 based on audio data. **FIG. 3A** depicts user interface 310 displaying a form 312, in this example, shown as unpopulated form 312(1) for population based on audio data. Form 312 includes a set of data fields, first data field 314(1), second data field 314(2), third data field 314(3), fourth data field 314(4), and fifth data field 314(5) (collectively, data fields 314). Each data field is associated with a value, first value 316(1), second value 316(2), third value 316(3), fourth value 316(4), and fifth value 316(5) (collectively, unpopulated data fields 314), for populating the data field. For example, first data field 314(1) comprises a first name data field, and first value 316(1) may be a first name for the user. User interface 310 further includes recording element 318(1), verification element 318(2), and submit element 318(3). Recording element 318(1) is configured to enable recording of audio data, such as described at step 202 of **FIG. 2****.** Verification element 318(2) is configured to enable submission of a verification request, such as described at step 208 of **FIG. 2****.** In this example, verification element 318(2) is associated with the entire form 312, however, other examples are possible, for example, where a verification element is associated with each data field 314, and/or each value 316.

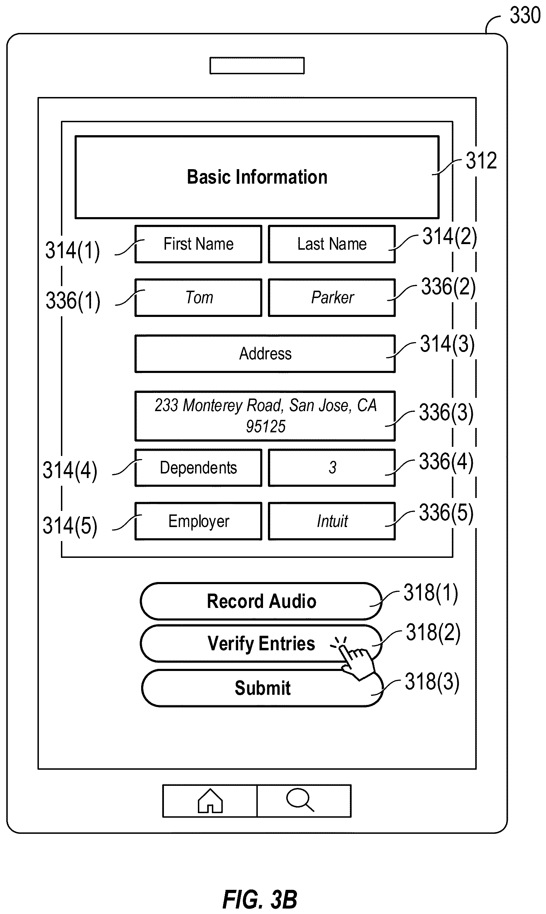

**FIG. 3B** depicts user interface 330 displaying populated form 312(2), with data fields 314, and populated values 336. Specifically, first populated value 336(1) is populated with a first name, Tom, for the first name data field 314(1) based on audio data. Similarly, second populated value 336(2), third populated value 336(3), fourth populated value 336(4), and fifth populated value 336(5) are populated based on audio data (e.g., collectively populated values 336), thus, creating a populated version of form 312, referred to as form 312(2).

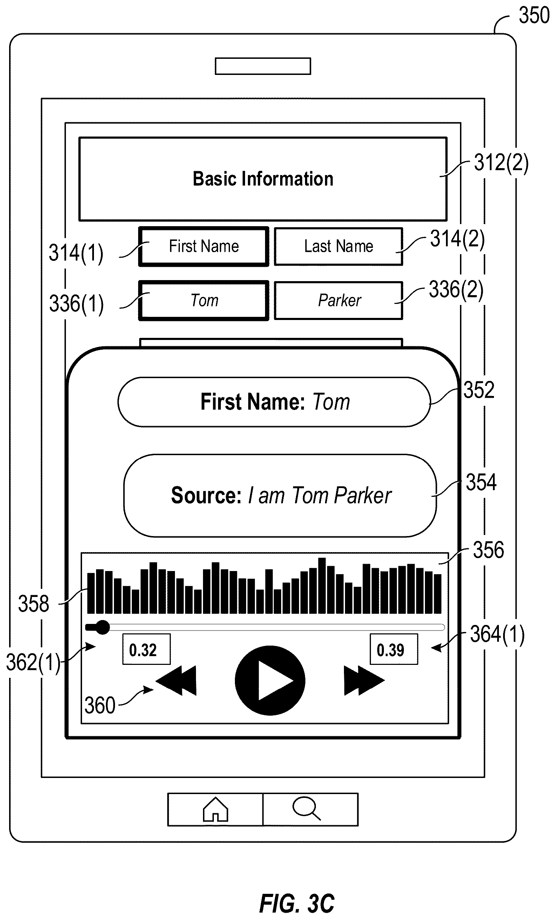

**FIG. 3C** depicts user interface 350 displaying populated form 312(2), with data fields 314 and populated values 336. User interface 350 depicts once verification element 318(2) is selected after form 312 is populated. In this example, first data field 314(1) and populated first value 336(1) is to be verified. Specifically, user interface 350 depicts an audio player element 356 configured to play the portion of audio data corresponding to the data field and value for verification, such as described at step 224 of **FIG. 2****.** The audio player element 356 includes a visual 358 of the audio data, a start timestamp 362(1) of the audio data portion, an end timestamp 364(1) of the audio data portion, and audio controls 360. Specifically, and as described at step 224, the audio player element 356 automatically navigates to start playing the audio data portion at the start timestamp 362(1) and stop playing the audio data portion at the end timestamp 364(1). Additionally, the value to be verified is displayed as verification value 352, as well as transcript element 354, displaying the text transcript corresponding to the verification value 352, enabling verification of the text transcript, the value, and the audio data portion.

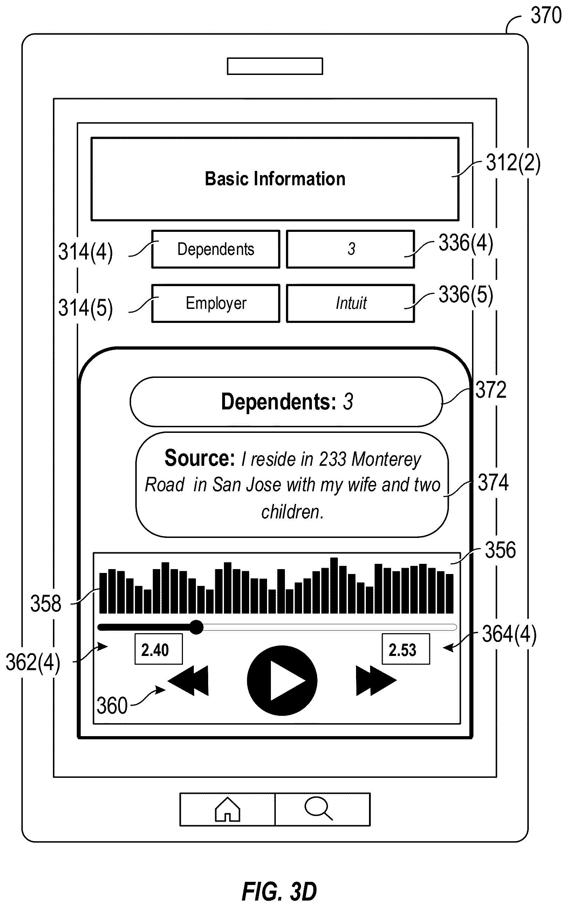

**FIG. 3D** depicts user interface 370 displaying populated form 312(2), with data fields 314 and populated values 336. User interface 370 depicts verification of another data field and value, fourth data field 314(4) and populated fourth populated value 336(4). Similar to **FIG. 3C****,** the audio player element 356 is displayed on user interface 350, including a visual 358 of the audio data and audio controls 360. The audio player element 356 automatically navigates to start playing the audio data portion at the start timestamp 362(4) and stop playing the audio data portion at the end timestamp 364(4) corresponding to the fourth populated value 336(4). Additionally, the value to be verified is displayed as verification value 372, as well as transcript element 374 displaying the text transcript corresponding to the verification value 372, enabling verification of the text transcript, the value, and the audio data portion.

Although not depicted, in some aspects, upon selection of verification element 318(2), each value 336 may be verified as depicted in **FIGS. 3C** and **3D****,** including second populated value 336(2), third populated value 336(3), and fourth populated value 336(4). For example, each populated value 336 may be verified sequentially, e.g., first populated value 336(1), then second populated value 336(2), then third populated value 336(3), then fourth populated value 336(4), and finally fifth populated value 336(5).

**FIGS. 4A-4D** depict another set of user interfaces for population and verification of a form 412 based on audio data, such as described with respect to workflow 200 in **FIG. 2****.** Specifically, **FIG. 4A** depicts user interface 410 displaying a form 412, in this example, shown as unpopulated form 412(1) for population based on audio data. Form 412 includes a set of data fields, first data field 414(1), second data field 414(2), third data field 414(3), fourth data field 414(4), and fifth data field 414(5) (collectively, data fields 414). Each data field is associated with a value, first value 416(1), second value 416(2), third value 416(3), fourth value 416(4), and fifth value 416(5) (collectively, unpopulated data fields 414), for populating the data field. For example, first data field 414(1) comprises a first name data field, and first value 416(1) may be a first name for the user. User interface 410 further includes recording element 420, and submit element 422. Recording element 420 is configured to enable recording of audio data, such as described at step 202 of **FIG. 2****.**

User interface 410 further includes a set of verification elements 418 each associated with a value 416. Specifically, a first verification element 418(1) is associated with first value 416(1), a second verification element 418(2) associated with a second value 416(2), a third verification element 418(3) associated with a third value 416(3), a fourth verification element 418(4) associated with a fourth value 416(4), and a fifth verification element 418(5) associated with a fifth value 416(5). Further, each verification element of the set of verification elements 418 is configured to enable submission of a verification request, such as described at step 208 of **FIG. 2****,** for its associated value 416. Although depicted here associated with the values 416, the verification elements 418 may similarly be associated with the data fields 414.

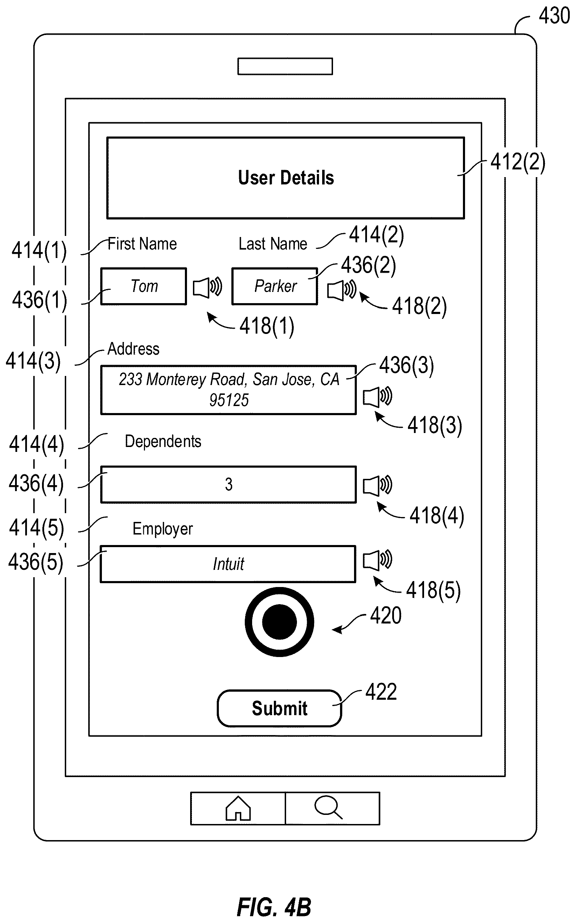

**FIG. 4B** depicts user interface 430 displaying populated form 412(2), with data fields 414, and populated values 436. Specifically, first populated value 436(1) is populated with a first name, Tom, for the first name data field 414(1) based on audio data. Similarly, second populated value 436(2), third populated value 436(3), fourth populated value 436(4), and fifth populated value 436(5) are populated based on audio data (e.g., collectively populated values 436), thus, creating a populated version of form 412, referred to as form 412(2).

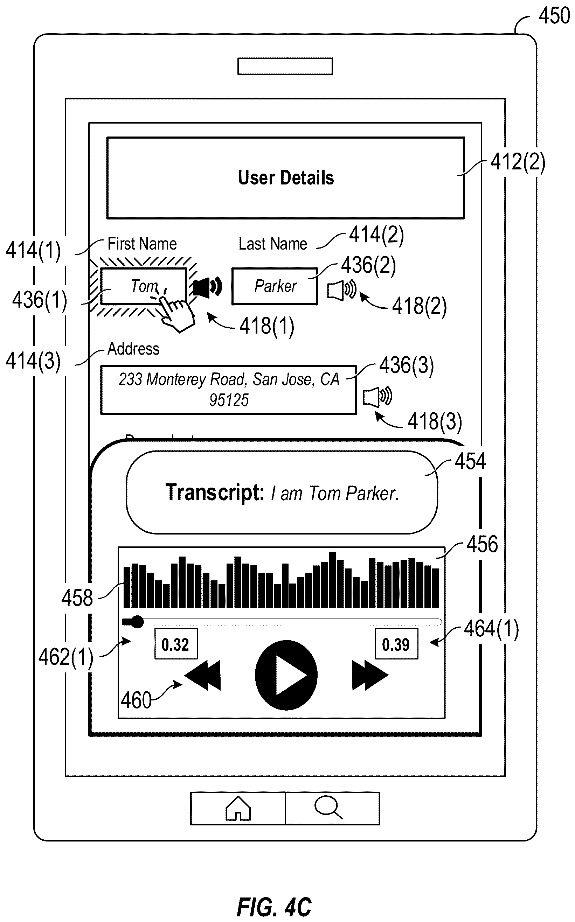

**FIG. 4C** depicts user interface 450 displaying populated form 412(2), with data fields 414 and populated values 436. User interface 450 depicts once verification element 418(1) is selected after form 412 is populated. In this example, first data field 414(1) and populated first value 436(1) are to be verified. Specifically, user interface 450 depicts an audio player element 456 configured to play the portion of audio data corresponding to the data field and value for verification, such as described at step 224 of **FIG. 2****.** The audio player element 456 includes a visual 458 of the audio data, a start timestamp 462(1) of the audio data portion, an end timestamp 464(1) of the audio data portion, and audio controls 460. Specifically, and as described at step 224, the audio player element 456 automatically navigates to start playing the audio data portion at the start timestamp 462(1) and stop playing the audio data portion at the end timestamp 464(1). Additionally, the transcript element 454 displays the text transcript corresponding to the first populated value 436(1), enabling verification of the text transcript, the value, and the audio data portion.

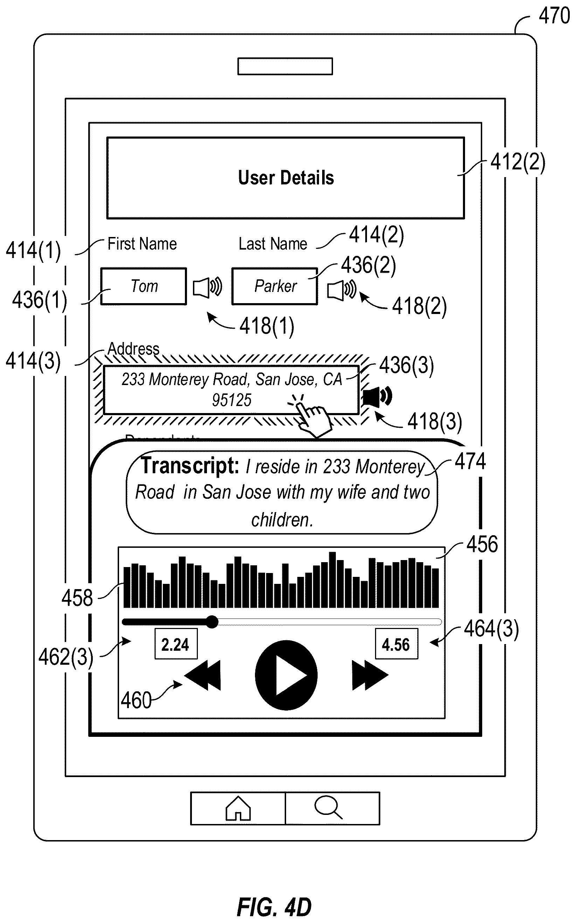

**FIG. 4D** depicts user interface 470 displaying populated form 412(2), with data fields 414 and populated values 436. User interface 470 depicts verification of another data field and value, third data field 414(3) and populated third value 436(3) based on selection of verification element 418(3). Similar to **FIG. 4C****,** the audio player element 456 is displayed on user interface 450, including a visual 458 of the audio data and audio controls 460. The audio player element 456 automatically navigates to start playing the audio data portion at the start timestamp 462(3) and stop playing the audio data portion at the end timestamp 464(3) corresponding to the third populated value 436(43). Additionally, the transcript element 474 displays the text transcript corresponding to the populated value 436(3), enabling verification of the text transcript, the value, and the audio data portion.

### Example Method for Field Narration

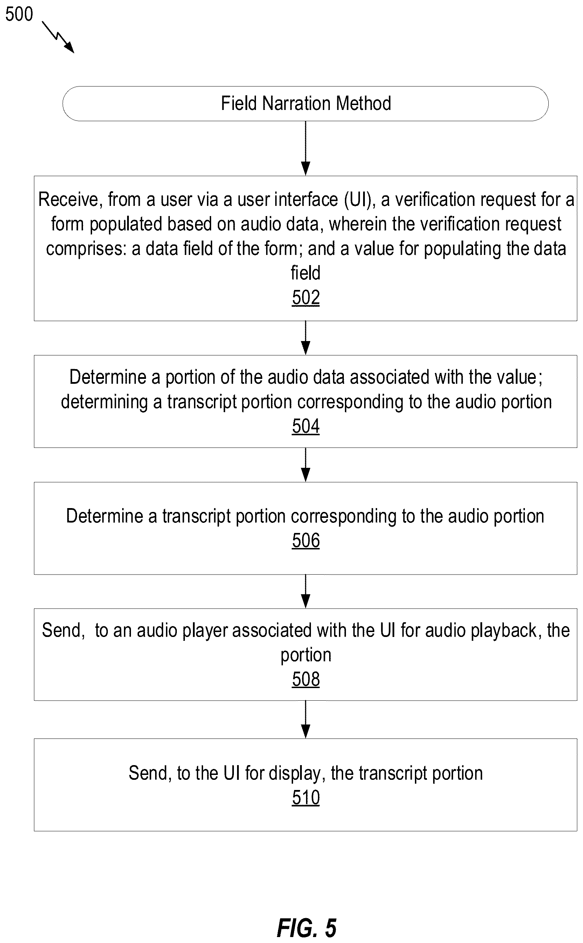

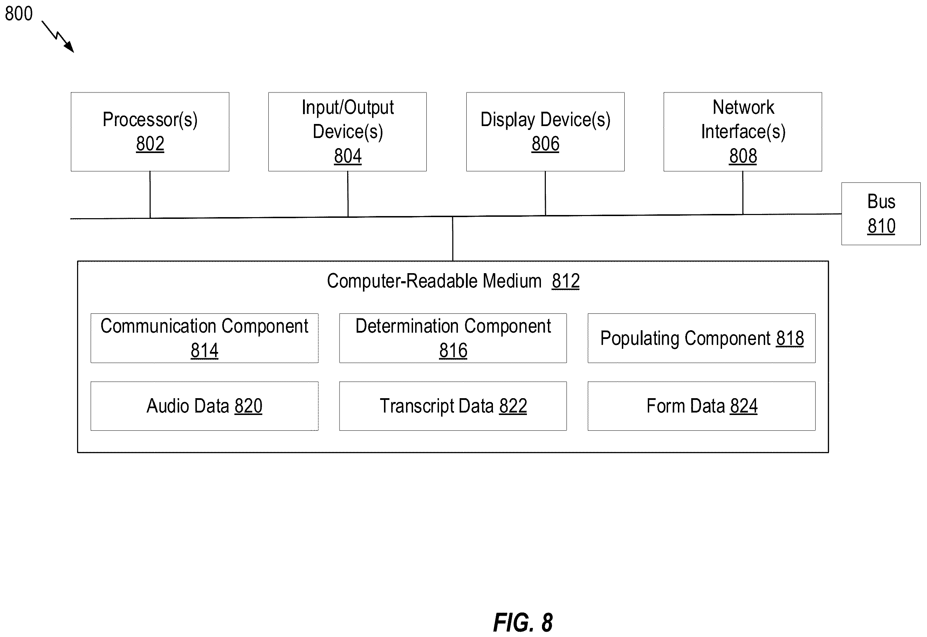

**FIG. 5** depicts an example method 500 for field narration, including form population and verification based on audio data. In one aspect, method 500 can be implemented by the system 100 of **FIG. 1** and/or processing system 800 of **FIG. 8****.**

In some embodiments, optionally, method 500 begins with receiving, from the user via a recording function associated with the UI, for example via recording element 420 of **FIG. 4A****,** the audio data comprising information for populating the form, such as described with respect to step 202 of **FIG. 2****.**

In some embodiments, method 500 further comprises populating the form based on the audio data, such as described with respect to step 206 of **FIG. 2****.** In some embodiments, populating the form based on the audio data, comprises: determining, based on the audio data, the value for the data field; and populating the data field on the form with the value, such as described with respect to step 206 of **FIG. 2****.**

Method 500 begins at block 502 with receiving, from a user via a user interface (UI), a verification request for a form populated based on audio data, for example, by selecting a verification element 418 of **FIGS. 4B-4D****,** wherein the verification request comprises: a data field of the form; and a value for populating the data field, such as described with respect to step 208 of

### FIG. 2.

Method 500 proceeds to block 504 with determining a portion of the audio data associated with the value, such as described with respect to step 214 of **FIG. 2****.**

In some embodiments, method 500 further comprises obtaining, from a data store, a transcription array of the audio data, wherein the transcription array comprises: an indicator of the data field of the form; the value for populating the data field of the form; a transcript of the audio data comprising a set of words; and a set of timestamps, wherein each timestamp of the set of timestamps is associated with each word of the set of words, such as described with respect to storage 106 of **FIG. 2****.**

In some embodiments, determining the audio portion of the audio data associated with the value, comprises: determining one or more words of the set of words associated with the value in the transcription array; identifying a start timestamp of the set of timestamps for a first word in the one or more words; identifying an end timestamp of the set of timestamps for a last word in the one or more words; and isolating, in the audio data, the audio portion consisting of audio data from the start timestamp until the end timestamp, such as described with respect to step 216 of FIG. 2.

Method 500 then proceeds to block 506 with determining a transcript portion corresponding to the audio portion, such as described with respect to step 218 of **FIG. 2****.**

In some embodiments, determining the transcript portion corresponding to the audio portion comprises i, in the transcript, the transcript portion comprising the one or more words of the set of words associated with the value in the transcript array, such as described with respect to step 218 of **FIG. 2****.**

In some embodiments, the one or more words of the set of words conveys the value.

Method 500 then proceeds to block 508 with sending, to an audio player associated with the UI for audio playback, the portion of the audio data, such as described with respect to step 222 of **FIG. 2****.**

For example, the audio data portion may commence playing at the start timestamp, e.g., the first word of the word(s) conveying the value for the data field to be verified, and cease playing at the end timestamp, e.g., the last word of the word(s) conveying the value for the data field to be verified. Thus, the audio data portion conveying the information may be played and directly verified, e.g., by a user listening, however, extraneous audio data is not played. For example, instead of seeking to the relevant portion, or guessing where the relevant portion may be, the audio play may automatically play only the portion conveying the information, by starting playing at the start timestamp and stopping playing at the end timestamp.

Method 500 then proceeds to block 510 with sending, to the UI for display, the transcript portion, such as described with respect to step 222 of **FIG. 2****.**

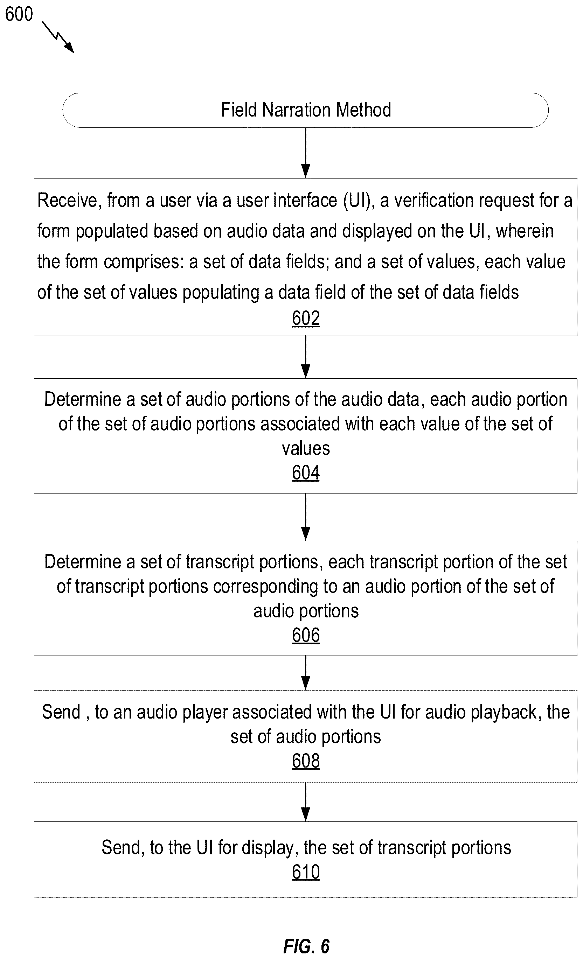

**FIG. 6** depicts an example method 600 for field narration, including form population and verification based on audio data. In one aspect, method 600 can be implemented by the system 100 of **FIG. 1** and/or processing system 800 of **FIG. 8****.**

In some embodiments, method 600 optionally begins with receiving, from the user via a recording function associated with the UI, for example, via recording element 318(1) of **FIG. 3A****,** the audio data comprising information for populating the form, such as described with respect to step 202 of **FIG. 2****.**

In some embodiments, method 600 further comprises populating the form based on the audio data, such as described with respect to step 206 of **FIG. 2****.**

Method 600 begins at block 602 with receiving, from a user via a user interface (UI), a verification request for a form populated based on audio data and displayed on the UI, for example, via verification element 318(2) of **FIG. 3B****,** wherein the form comprises: a set of data fields; and a set of values, each value of the set of values populating a data field of the set of data fields, such as described with respect to step 208 of **FIG. 2****.**

In some aspects, populating the form based on the audio data, comprises: determining, based on the audio data, the set of values for the set of data field; and populating each data field of the set of data fields on the form with a corresponding value of the set of data fields, such as described with respect to step 206 of **FIG. 2****.**

Method 600 proceeds to block 604 with determining a set of audio portions of the audio data, each audio portion of the set of audio portions associated with each value of the set of values, such as described with respect to step 214 of **FIG. 2****.**

In some aspects, method 600 further comprises: obtaining, from a data store, a transcription array of the audio data, wherein the transcription array comprises: the set of data fields of the form; the set of values associated with the form; a transcript of the audio data comprising a set of words; and a set of timestamps, wherein each timestamp of the set of timestamps is associated with each word of the set of words, such as described with respect to storage 106 of **FIG. 2****.**

In some embodiments, determining the set of audio portions of the audio data, comprises: for the each value of the set of values, determining one or more words of the set of words associated with the each value in the transcription array; identifying a start timestamp of the set of timestamps for a first word in the one or more words; identifying an end timestamp of the set of timestamps for a last word in the one or more words; and identifying, in the audio data, the audio portion comprising the audio data from the start timestamp until the end timestamp, such as described with respect to step 214 of **FIG. 2****.**

Method 600 then proceeds to block 606 with determining a set of transcript portions, each transcript portion of the set of transcript portions corresponding to an audio portion of the set of audio portions, such as described with respect to step 218 of **FIG. 2****.**

In some aspects, determining the set of transcript portions comprises: for each transcript portion in the set of transcript portions, identifying, in the transcript, the one or more words of the set of words associated with the value in the transcript array, such as described with respect to step 218 of **FIG. 2****.**

Method 600 then proceeds to block 608 with sending, to an audio player associated with the UI, the set of audio portions, such as described with respect to step 222 of **FIG. 2****.**

For example, the audio data portion may commence playing at the start timestamp, e.g., the first word of the word(s) conveying the value for the data field to be verified, and cease playing at the end timestamp, e.g., the last word of the word(s) conveying the value for the data field to be verified. Thus, the audio data portion conveying the information may be played and directly verified, e.g., by a user listening, however, extraneous audio data is not played. For example, instead of seeking to the relevant portion, or guessing where the relevant portion may be, the audio play may automatically play only the portion conveying the information, by starting playing at the start timestamp and stopping playing at the end timestamp.

Method 600 then proceeds to block 610 with sending, to the UI for display, the set of transcription portions, such as described with respect to step 222 of **FIG. 2****.**

In some embodiments, method 600 further comprises receiving a set of visual indicators to the UI for display, for example as depicted in **FIGS. 3C-3D****,** wherein: each visual indicator in the set of visual indicators is associated with a value of the set of values, and each visual indicator is configured for display on the UI, wherein the visual indicator is displayed while playing, by the audio player, of each respective audio portion of the audio portions, such as described with respect to step 228 of **FIG. 2****.**

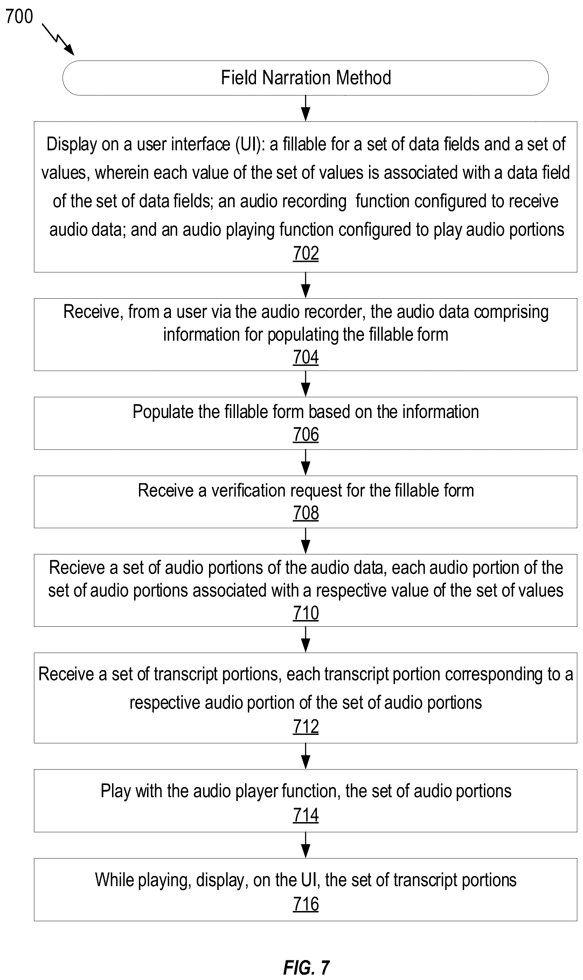

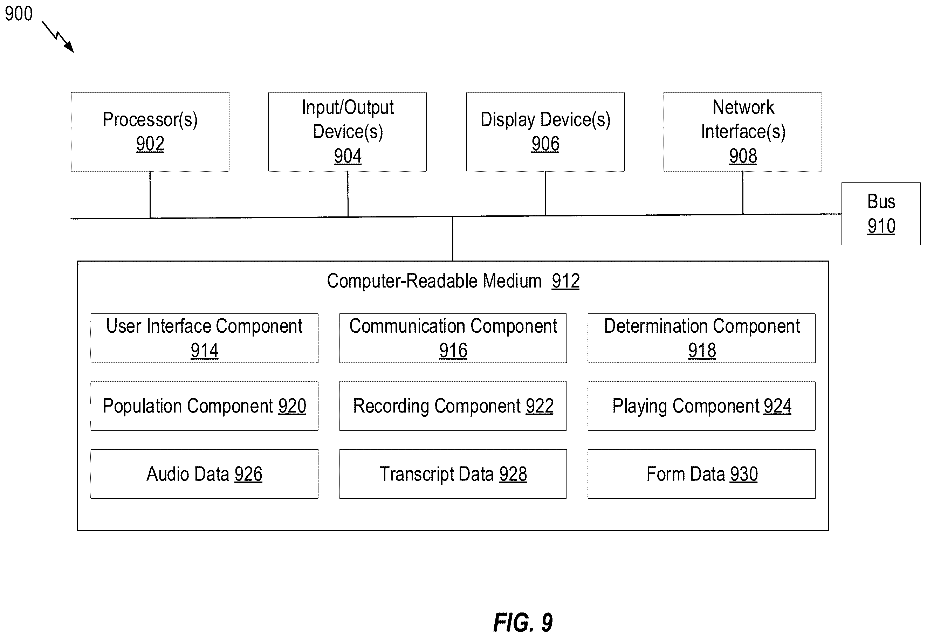

**FIG. 7** depicts an example method 700 for field narration, including form population and verification based on audio data. In one aspect, method 700 can be implemented by the system 100 of **FIG. 1** and/or processing system 900 of **FIG. 9****.**

Initially method 700 begins at block 702 with displaying, on a user interface (UI): a fillable form, e.g., form 312 of **FIGS. 3A-3D** or form 412 of **FIGS. 4A-4D****,** comprising a set of data fields, e.g., data fields 314 of **FIGS. 3A-3D****,** and a set of values e.g., values 316, wherein each value of the set of values is associated with a data field of the set of data fields; an audio recording function configured to receive audio data, e.g., recording element 318(1); and an audio playing function configured to play audio portions, e.g., audio player element 356.

Method 700 proceeds to block 704 with receiving, from a user via the audio recorder function, e.g., recording element 318(1), the audio data comprising information for populating the fillable form.

Method 700 then proceeds to block 706 with populating the fillable form based on the information.

Method 700 then proceeds to block 708 with receiving a verification request for the fillable form, such as through verification element 318(2), such as described with respect to step 208 of **FIG. 2****.**

Method 700 then proceeds to block 710 with receiving a set of audio portions of the audio data, each audio portion of the set of audio portions associated with a respective value of the set of values, such as described with respect to step 222 of **FIG. 2****.**

Method 700 then proceeds to block 712 with receiving a set of transcript portions, each transcript portion corresponding to a respective audio portion of the set of audio portions, such as described with respect to step 222 of **FIG. 2****.**

Method 700 then proceeds to block 714 with playing, with the audio player function, such as through audio player element 356, the set of audio portions, such as described with respect to step 224 of **FIG. 2****.**

For example, the audio data portion may commence playing at the start timestamp, e.g., the first word of the word(s) conveying the value for the data field to be verified, and cease playing at the end timestamp, e.g., the last word of the word(s) conveying the value for the data field to be verified. Thus, the audio data portion conveying the information may be played and directly verified, e.g., by a user listening, however, extraneous audio data is not played. For example, instead of seeking to the relevant portion, or guessing where the relevant portion may be, the audio play may automatically play only the portion conveying the information, by starting playing at the start timestamp and stopping playing at the end timestamp.

While playing, method 700 then proceeds to block 716 with displaying, on the UI, the set of transcript portions, such as described with respect to step 226 of **FIG. 2****.**

In some embodiments, displaying, on the UI, the set of transcript portions comprises: displaying, on the UI, a set of words associated with a transcript portion of the set of transcript portions, the set of words transcribing the respective audio portion of the set of audio portions, e.g., transcription element 354; and displaying, on the UI, a paired timestamp corresponding to the respective audio portion of the set of audio portions, wherein the paired timestamp comprises a start timestamp associated with a start of the respective audio portion, e.g., 362(1) and an end timestamp associated with an end of the respective audio portion, e.g., 364(1), such as described with respect to step 222 of **FIG. 2****.**

In some aspects, method 700 further comprises receiving, a set of visual indicators, wherein each visual indicator in the set of visual indicators is associated with a respective value of the set of values and a corresponding audio portion of the set of audio portions, such as described with respect to step 228 of **FIG. 2****.**

In some embodiments, method 700 further comprises while playing, displaying, on the UI, each respective visual indicator on the fillable form, such as described with respect to step 228 of **FIG. 2****.**

Note that **FIGS. 5-7** are just examples of a method, and other methods including fewer, additional, or alternative operations are possible consistent with this disclosure.

### Example Processing System for Field Narration

**FIG. 8** depicts an example processing system 800 configured to perform various aspects described herein, including, for example, method 500 as described above with respect to **FIG. 5** or method 600 as described above with respect to **FIG. 6****.**

Processing system 800 is generally be an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 800 includes one or more processors 802, one or more input/output devices 804, one or more display devices 806, one or more network interfaces 808 through which processing system 800 is connected to one or more networks (e.g., a local network, an intranet, the Internet, or any other group of processing systems communicatively connected to each other), and computer-readable medium 812. In the depicted example, the aforementioned components are coupled by a bus 810, which may generally be configured for data exchange amongst the components. Bus 810 may be representative of multiple buses, while only one is depicted for simplicity.

Processor(s) 802 are generally configured to retrieve and execute instructions stored in one or more memories, including local memories like computer-readable medium 812, as well as remote memories and data stores. Similarly, processor(s) 802 are configured to store application data residing in local memories like the computer-readable medium 812, as well as remote memories and data stores. More generally, bus 810 is configured to transmit programming instructions and application data among the processor(s) 802, display device(s) 806, network interface(s) 808, and/or computer-readable medium 812. In certain embodiments, processor(s) 802 are representative of a one or more central processing units (CPUs), graphics processing unit (GPUs), tensor processing unit (TPUs), accelerators, and other processing devices.

Input/output device(s) 804 may include any device, mechanism, system, interactive display, and/or various other hardware and software components for communicating information between processing system 800 and a user of processing system 800. For example, input/output device(s) 804 may include input hardware, such as a keyboard, touch screen, button, microphone, speaker, and/or other device for receiving inputs from the user and sending outputs to the user.

Display device(s) 806 may generally include any sort of device configured to display data, information, graphics, user interface elements, and the like to a user. For example, display device(s) 806 may include internal and external displays such as an internal display of a tablet computer or an external display for a server computer or a projector. Display device(s) 806 may further include displays for devices, such as augmented, virtual, and/or extended reality devices. In various embodiments, display device(s) 806 may be configured to display a graphical user interface.

Network interface(s) 808 provide processing system 800 with access to external networks and thereby to external processing systems. Network interface(s) 808 can generally be any hardware and/or software capable of transmitting and/or receiving data via a wired or wireless network connection. Accordingly, network interface(s) 808 can include a communication transceiver for sending and/or receiving any wired and/or wireless communication.

Computer-readable medium 812 may be a volatile memory, such as a random access memory (RAM), or a nonvolatile memory, such as nonvolatile random access memory (NVRAM), or the like. In this example, computer-readable medium 812 includes a communication component 814, a determination component 816, a population component 818, audio data 820, transcript data 822, and form data 824.

In certain embodiments, communication component 814 is configured to send and receive data, for example, receive audio data 820, receive a verification request, send an audio portion, send a transcript portion, and send visual indicators. For example, the communication component 814 may be configured to receive, from the user via a recording function associated with the UI, audio data 820 comprising information for populating a form, such as described with respect to step 202 of **FIG. 2****.** The form may include a set of data fields; and a set of values, each value of the set of values populating a data field of the set of data fields, and be stored as form data 824. For example, the communication component 814 may be configured to receive, a verification request for the form populated based on audio data and displayed on the UI, for example, via verification element 318(2) of **FIG. 3B****,** wherein the form comprises:, such as described with respect to step 208 of **FIG. 2****.** In another example, the communication component 814 may be configured to send to an audio player associated with the UI, the set of audio portions, such as described with respect to step 222 of **FIG. 2****.** In yet another example, the communication component 814 may be further configured to send to the UI for display, the set of transcription portions, such as described with respect to step 222 of **FIG. 2****.**

In certain embodiments, determination component 816 is configured to determine audio portions of the audio data 820 and transcription portions of the transcript data 822 for verifying the form. For example, the determination component 816 may be configured to determine a set of audio portions of the audio data, each audio portion of the set of audio portions associated with each value of the set of values, such as described with respect to step 214 of **FIG. 2****.** In an example, the determination component 816 may be configured to determine a set of transcript portions, each transcript portion of the set of transcript portions corresponding to an audio portion of the set of audio portions, such as described with respect to step 218 of **FIG. 2****.**

In certain embodiments, population component 818 is configured to populate a form with form data 824 based on the audio data 820. For example, population component 818 may be configured to populate the form based on the audio data, such as described with respect to step 206 of **FIG. 2****.**

Note that **FIG. 8** is just one example of a processing system consistent with aspects described herein, and other processing systems having additional, alternative, or fewer components are possible consistent with this disclosure.

### Example Processing System for Field Narration

**FIG. 9** depicts an example processing system 900 configured to perform various aspects described herein, including, for example, method 700 as described above with respect to **FIG. 7****.**

Processing system 900 is generally be an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 900 includes one or more processors 902, one or more input/output devices 904, one or more display devices 906, one or more network interfaces 908 through which processing system 900 is connected to one or more networks (e.g., a local network, an intranet, the Internet, or any other group of processing systems communicatively connected to each other), and computer-readable medium 912. In the depicted example, the aforementioned components are coupled by a bus 910, which may generally be configured for data exchange amongst the components. Bus 910 may be representative of multiple buses, while only one is depicted for simplicity.

Processor(s) 902 are generally configured to retrieve and execute instructions stored in one or more memories, including local memories like computer-readable medium 912, as well as remote memories and data stores. Similarly, processor(s) 902 are configured to store application data residing in local memories like the computer-readable medium 912, as well as remote memories and data stores. More generally, bus 910 is configured to transmit programming instructions and application data among the processor(s) 902, display device(s) 906, network interface(s) 908, and/or computer-readable medium 912. In certain embodiments, processor(s) 902 are representative of a one or more central processing units (CPUs), graphics processing unit (GPUs), tensor processing unit (TPUs), accelerators, and other processing devices.

Input/output device(s) 904 may include any device, mechanism, system, interactive display, and/or various other hardware and software components for communicating information between processing system 900 and a user of processing system 900. For example, input/output device(s) 904 may include input hardware, such as a keyboard, touch screen, button, microphone, speaker, and/or other device for receiving inputs from the user and sending outputs to the user.

Display device(s) 906 may generally include any sort of device configured to display data, information, graphics, user interface elements, and the like to a user. For example, display device(s) 906 may include internal and external displays such as an internal display of a tablet computer or an external display for a server computer or a projector. Display device(s) 906 may further include displays for devices, such as augmented, virtual, and/or extended reality devices. In various embodiments, display device(s) 906 may be configured to display a graphical user interface.

Network interface(s) 908 provide processing system 900 with access to external networks and thereby to external processing systems. Network interface(s) 908 can generally be any hardware and/or software capable of transmitting and/or receiving data via a wired or wireless network connection. Accordingly, network interface(s) 908 can include a communication transceiver for sending and/or receiving any wired and/or wireless communication.

Computer-readable medium 912 may be a volatile memory, such as a random access memory (RAM), or a nonvolatile memory, such as nonvolatile random access memory (NVRAM), or the like. In this example, computer-readable medium 912 includes a user interface component 914, a communication component 916, a determination component 918, a population component 920, recording component 922, a playing component 924, audio data 926, transcript data 928, and form data 930.

In certain embodiments, user interface component 914 is configured to display a form, such as form data 930, including a set of data fields and a set of values, an audio recording function configured to control recording component 922, an audio playing function configured to control playing component 924. For example, the user interface component 914 may be configured to display a fillable form, e.g., form 312 of **FIGS. 3A-3D** or form 412 of **FIGS. 4A-4D****,** comprising a set of data fields, e.g., data fields 314 of **FIGS. 3A-3D****,** and a set of values e.g., values 316, wherein each value of the set of values is associated with a data field of the set of data fields; an audio recording function configured to receive audio data; and an audio playing function configured to play audio portions. In another example, user interface component 914 may be configured to display a set of transcript portions, such as described with respect to step 226 of **FIG. 2****.** In yet another example, user interface component 914 may be configured to display each respective visual indicator on the fillable form, such as described with respect to step 228 of **FIG. 2****.**

In certain embodiments, communication component 916 is configured to send and receive data, for example, receive audio data 926 from the user, a verification request for the fillable form, a set of audio data portions of the audio data 926, For example, communication component 916 may be configured to receive the audio data comprising information for populating the fillable form. In some examples, communication component 916 may be configured to receive a verification request for the fillable form, such as through verification element 318(2), such as described with respect to step 208 of **FIG. 2****.** In another example, communication component 916 may be configured to receive a set of audio portions of the audio data, each audio portion of the set of audio portions associated with a respective value of the set of values, such as described with respect to step 222 of **FIG. 2****.** In yet another example, communication component 916 may be configured to receive a set of transcript portions, each transcript portion corresponding to a respective audio portion of the set of audio portions, such as described with respect to step 222 of **FIG. 2****.** In another example communication component 916 may be configured to receive a set of visual indicators, wherein each visual indicator in the set of visual indicators is associated with a respective value of the set of values and a corresponding audio portion of the set of audio portions, such as described with respect to step 228 of **FIG. 2****.**

In certain embodiments, playing component 924 is configured to play portions of audio data. For example, the playing component 924 may be configured to play the set of audio portions, such as described with respect to step 224 of **FIG. 2****.**

In certain embodiments, population component 920 is configured to populate the fillable form based on transcription data 928. For example, population component 920 may be configured to the fillable form based on the information.

Note that **FIG. 9** is just one example of a processing system consistent with aspects described herein, and other processing systems having additional, alternative, or fewer components are possible consistent with this disclosure.

As noted variously above, the presently disclosed techniques may be deployed by way of providing instructions (e.g. software) to a programmable processor of a computer system for execution. Such instructions are provided to a programmable processor by way of a computer-readable medium that stores and/or conveys the instructions for access by the programmable processor. A computer readable medium may be a computer-readable storage medium which can store instructions. Such a computer-readable storage medium may be referred to as a non-transitory computer-readable medium. Examples of a computer-readable storage medium may include a CD, a DVD, a storage device, a diskette, a tape, flash memory, physical memory, or any other computer-readable storage medium. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Therefore, from one perspective, there have been described systems and methods for field narration. For example, field narration may be configured to populate and verify a form populated based on audio data. A user interface may send a verification request for the form, including a data field and a value to be verified to a field narrative service. The field narrative service may determine relevant portions of the audio data and the transcript for the value to be verified. The user interface may play the portion of audio data, and display the transcription for verification.

### Example Clauses

Implementation examples are described in the following numbered clauses:
Clause 1: A method, comprising: receiving, from a user via a user interface (UI), a verification request for a form populated based on audio data, wherein the verification request comprises: a data field of the form; and a value for populating the data field; determining a portion of the audio data associated with the value; determining a transcript portion corresponding to the audio portion; sending, to an audio player associated with the UI for audio playback, the portion; and sending, to the UI for display, the transcript portion.
Clause 2: The method of clause 1, further comprising: obtaining, from a data store, a transcription array of the audio data, wherein the transcription array comprises: an indicator of the data field of the form; the value for populating the data field of the form; a transcript of the audio data comprising a set of words; and a set of timestamps, wherein each timestamp of the set of timestamps is associated with each word of the set of words.
Clause 3: The method of clause 2, wherein determining the audio portion of the audio data associated with the value, comprises: determining one or more words of the set of words associated with the value in the transcription array; identifying a start timestamp of the set of timestamps for a first word in the one or more words; identifying an end timestamp of the set of timestamps for a last word in the one or more words; and isolating, in the audio data, the audio portion consisting of audio data from the start timestamp until the end timestamp.
Clause 4: The method of clause 3, wherein determining the transcript portion corresponding to the audio portion comprises identifying, in the transcript, the transcript portion comprising the one or more words of the set of words associated with the value in the transcript array.
Clause 5: The method of any one of clauses 3-4, wherein the one or more words of the set of words conveys the value.
Clause 6: The method of any one of clauses 1-5, further comprising receiving, from the user via a recording function associated with the UI, the audio data comprising information for populating the form.
Clause 7: The method of clause 6, further comprising populating the form based on the audio data.
Clause 8: The method of clause 7, wherein populating the form based on the audio data, comprises: determining, based on the audio data, the value for the data field; and populating the data field on the form with the value.
Clause 9: A method, comprising: receiving, from a user via a user interface (UI), a verification request for a form populated based on audio data and displayed on the UI, wherein the form comprises: a set of data fields; and a set of values, each value of the set of values populating a data field of the set of data fields; determining a set of audio portions of the audio data, each audio portion of the set of audio portions associated with each value of the set of values; determining a set of transcript portions, each transcript portion of the set of transcript portions corresponding to an audio portion of the set of audio portions; sending, to an audio player associated with the UI, the set of audio portions; and sending, to the UI for display, the set of transcription portions.
Clause 10: The method of clause 9, further comprising: sending a set of visual indicators to the UI for display, wherein: each visual indicator in the set of visual indicators is associated with a value of the set f values, and each visual indicator is configured for display on the UI, wherein the visual indicator is displayed while playing, by the audio player, of each respective audio portion of the audio portions.
Clause 11: The method of any one of clauses 9-10, further comprising: obtaining, from a data store, a transcription array of the audio data, wherein the transcription array comprises: the set of data fields of the form; the set of values associated with the form; a transcript of the audio data comprising a set of words; and a set of timestamps, wherein each timestamp of the set of timestamps is associated with each word of the set of words.
Clause 12: The method of clause 11, wherein determining the set of audio portions of the audio data, comprises: for the each value of the set of values, determining one or more words of the set of words associated with the each value in the transcription array; identifying a start timestamp of the set of timestamps for a first word in the one or more words; identifying an end timestamp of the set of timestamps for a last word in the one or more words; and identifying, in the audio data, the audio portion comprising the audio data from the start timestamp until the end timestamp.
Clause 13: The method of clause 12, wherein determining the set of transcript portions, comprises: for each transcript portion in the set of transcript portions, identifying, in the transcript, the one or more words of the set of words associated with the value in the transcript array.
Clause 14: The method of any one of clauses 9-14, further comprising receiving, from the user via a recording function associated with the UI, the audio data comprising information for populating the form.
Clause 15: The method of clause 14, further comprising populating the form based on the audio data.
Clause 16: The method of clause 15, wherein populating the form based on the audio data, comprises: determining, based on the audio data, the set of values for the set of data field; and populating each data field of the set of data fields on the form with a corresponding value of the set of data fields.
Clause 17: A method, comprising: displaying, on a user interface (UI): a fillable for a set of data fields and a set of values, wherein each value of the set of values is associated with a data field of the set of data fields; an audio recording function configured to receive audio data; and an audio playing function configured to play audio portions; receiving, from a user via the audio recorder, the audio data comprising information for populating the fillable form; populating the fillable form based on the information; receiving a verification request for the fillable form; receiving a set of audio portions of the audio data, each audio portion of the set of audio portions associated with a respective value of the set of values; receiving a set of transcript portions, each transcript portion corresponding to a respective audio portion of the set of audio portions; playing with the audio player function, the set of audio portions; and while playing, displaying, on the UI, the set of transcript portions.
Clause 18: The method of clause 17, further comprising: receiving, a set of visual indicators, wherein each visual indicator in the set of visual indicators is associated with a respective value of the set of values and a corresponding audio portion of the set of audio portions.
Clause 19; The method of clause 18, further comprising while playing, displaying, on the UI, each respective visual indicator on the fillable form.
Clause 20: The method of any one of clauses 17-19, wherein displaying, on the UI, the set of transcript portions comprises: displaying, on the UI, a set of words associated with a transcript portion of the set of transcript portions, the set of words transcribing the respective audio portion of the set of audio portions; and displaying, on the UI, a paired timestamp corresponding to the respective audio portion of the set of audio portions, wherein the paired timestamp comprises a start timestamp associated with a start of the respective audio portion and an end timestamp associated with an end of the respective audio portion.
Clause 21. A method, comprising: receiving, from a user via a user interface (UI), a verification request for a form populated based on audio data, wherein the verification request comprises: a data field of the form; and a value for populating the data field; determining a portion of the audio data associated with the value; determining a transcript portion corresponding to the portion of the audio data; sending, to an audio player associated with the UI for audio playback, the portion; and sending, to the UI for display, the transcript portion.
Clause 22. The method of clause 21, further comprising: obtaining, from a data store, a transcription array of the audio data, wherein the transcription array comprises: an indicator of the data field of the form; the value for filling the data field of the form; a transcript of the audio data comprising a set of words; and a set of timestamps, wherein each timestamp of the set of timestamps is associated with each word of the set of words.
Clause 23. The method of clause 22, wherein determining the portion of the audio data associated with the value, comprises: determining one or more words of the set of words associated with the value in the transcription array; identifying a start timestamp of the set of timestamps for a first word in the one or more words; identifying an end timestamp of the set of timestamps for a last word in the one or more words; and isolating, in the audio data, the portion of audio data consisting of audio data from the start timestamp until the end timestamp.
Clause 24. The method of clause 23, wherein determining the transcript portion corresponding to the portion of the audio data, comprises identifying, in the transcript, the transcript portion comprising the one or more words of the set of words associated with the value in the transcript array.
Clause 25. The method of clause 23 or 24, wherein the one or more words of the set of words conveys the value.
Clause 26. The method of any of clauses 21 to 25, further comprising receiving, from the user via a recording function associated with the UI, the audio data comprising information for populating the form.
Clause 27. The method of clause 26, further comprising populating the form based on the audio data.
Clause 28. The method of clause 27, wherein populating the form based on the audio data, comprises: determining, based on the audio data, the value for the data field; and populating the data field on the form with the value.
Clause 29. A method, comprising: receiving, from a user via a user interface (UI), a verification request for a form filled based on audio data and displayed on the UI, wherein the form comprises: a set of data fields; and a set of values, each value of the set of values filling a data field of the set of data fields; determining a set of audio portions of the audio data, each audio portion of the set of audio portions associated with each value of the set of values; determining a set of transcript portions, each transcript portion of the set of transcript portions corresponding to an audio portion of the set of audio portions; sending, to an audio player associated with the UI, the set of audio portions; and sending, to the UI for display, the set of transcription portions.
Clause 30. The method of clause 29, further comprising: sending a set of visual indicators to the UI for display, wherein: each visual indicator in the set of visual indicators is associated with a value of the set of values, and each visual indicator is configured for display on the UI, wherein the visual indicator is displayed while playing, by the audio player, of each respective audio portion of the audio portions.
Clause 31. The method of clause 29 or 30, further comprising: obtaining, from a data store, a transcription array of the audio data, wherein the transcription array comprises: the set of data fields of the form; the set of values associated with the form; a transcript of the audio data comprising a set of words; and a set of timestamps, wherein each timestamp of the set of timestamps is associated with each word of the set of words.
Clause 32. The method of clause 31, wherein determining the set of audio portions of the audio data, comprises: for the each value of the set of values, determining one or more words of the set of words associated with the each value in the transcription array; identifying a start timestamp of the set of timestamps for a first word in the one or more words; identifying an end timestamp of the set of timestamps for a last word in the one or more words; and identifying, in the audio data, the audio portion comprising the audio data from the start timestamp until the end timestamp.
Clause 33. The method of clause 32, wherein determining the set of transcript portions, comprises: for each transcript portion in the set of transcript portions, identifying, in the transcript, the one or more words of the set of words associated with the value in the transcript array.
Clause 34. The method of any of clauses 29 to 33, further comprising receiving, from the user via a recording function associated with the UI, the audio data comprising information for populating the form.
Clause 35. The method of clause 34, further comprising populating the form based on the audio data.
Clause 36. The method of clause 35, wherein populating the form based on the audio data, comprises: determining, based on the audio data, the set of values for the set of data field; and populating each data field of the set of data fields on the form with a corresponding value of the set of data fields.
Clause 37. A method, comprising: displaying, on a user interface (UI): a fillable form comprising a set of data fields and a set of values, wherein each value of the set of values is associated with a data field of the set of data fields; an audio recording function configured to receive audio data; and an audio playing function configured to play audio portions; receiving, from a user via the audio recorder, the audio data comprising information for populating the fillable form; populating the fillable form based on the information; receiving a verification request for the fillable form; receiving a set of audio portions of the audio data, each audio portion of the set of audio portions associated with a respective value of the set of values; receiving a set of transcript portions, each transcript portion corresponding to a respective audio portion of the set of audio portions; and playing, with an audio player function, the set of audio portions; and while playing, displaying, on the UI, the set of transcript portions.
Clause 38. The method of clause 37, further comprising: receiving, a set of visual indicators, wherein each visual indicator in the set of visual indicators is associated with a respective value of the set of values and a corresponding audio portion of the set of audio portions.
Clause 39. The method of clause 38, further comprising while playing, displaying, on the UI, each respective visual indicator on the fillable form.
Clause 40. The method of clause 37, 38 or 39, wherein displaying, on the UI, the set of transcript portions comprises: displaying, on the UI, a set of words associated with a transcript portion of the set of transcript portions, the set of words transcribing the respective audio portion of the set of audio portions; and displaying, on the UI, a paired timestamp corresponding to the respective audio portion of the set of audio portions, wherein the paired timestamp comprises a start timestamp associated with a start of the respective audio portion and an end timestamp associated with an end of the respective audio portion.
Clause 41: A processing system, comprising: a memory comprising computer-executable instructions; and a processor configured to execute the computer-executable instructions and cause the processing system to perform a method in accordance with any one of Clauses 1-40.
Clause 42: A processing system, comprising means for performing a method in accordance with any one of Clauses 1-40.
Clause 43: A computer-readable medium comprising program code for causing a processing system to perform the steps of any one of Clauses 1-40.
Clause 44: A computer program product embodied on a computer-readable storage medium comprising code for performing a method in accordance with any one of Clauses 1-40.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method, comprising:
receiving, from a user via a user interface (UI), a verification request for a form populated based on audio data, wherein the verification request comprises:
a data field of the form; and
a value for populating the data field;
determining a portion of the audio data associated with the value;
determining a transcript portion corresponding to the portion of the audio data;
sending, to an audio player associated with the UI for audio playback, the portion; and
sending, to the UI for display, the transcript portion.

2. The method of claim 1, further comprising:
obtaining, from a data store, a transcription array of the audio data, wherein the transcription array comprises:
an indicator of the data field of the form;
the value for filling the data field of the form;
a transcript of the audio data comprising a set of words; and
a set of timestamps, wherein each timestamp of the set of timestamps is associated with each word of the set of words.

3. The method of claim 2, wherein determining the portion of the audio data associated with the value, comprises:
determining one or more words of the set of words associated with the value in the transcription array;
identifying a start timestamp of the set of timestamps for a first word in the one or more words;
identifying an end timestamp of the set of timestamps for a last word in the one or more words; and
isolating, in the audio data, the portion of audio data consisting of audio data from the start timestamp until the end timestamp.

4. The method of claim 3, wherein determining the transcript portion corresponding to the portion of the audio data, comprises identifying, in the transcript, the transcript portion comprising the one or more words of the set of words associated with the value in the transcript array; and/or wherein the one or more words of the set of words conveys the value.

5. The method of any preceding claim, further comprising receiving, from the user via a recording function associated with the UI, the audio data comprising information for populating the form; and for example populating the form based on the audio data, wherein populating the form based on the audio data may comprise: determining, based on the audio data, the value for the data field; and populating the data field on the form with the value.

6. A method, comprising:
receiving, from a user via a user interface (UI), a verification request for a form filled based on audio data and displayed on the UI, wherein the form comprises:
a set of data fields; and
a set of values, each value of the set of values filling a data field of the set of data fields;
determining a set of audio portions of the audio data, each audio portion of the set of audio portions associated with each value of the set of values;
determining a set of transcript portions, each transcript portion of the set of transcript portions corresponding to an audio portion of the set of audio portions;
sending, to an audio player associated with the UI, the set of audio portions; and
sending, to the UI for display, the set of transcription portions.

7. The method of claim 6, further comprising:
sending a set of visual indicators to the UI for display,
wherein:
each visual indicator in the set of visual indicators is associated with a value of the set of values, and
each visual indicator is configured for display on the UI, wherein the visual indicator is displayed while playing, by the audio player, of each respective audio portion of the audio portions.

8. The method of claim 6 or 7, further comprising:
obtaining, from a data store, a transcription array of the audio data, wherein the transcription array comprises:
the set of data fields of the form;
the set of values associated with the form;
a transcript of the audio data comprising a set of words; and
a set of timestamps, wherein each timestamp of the set of timestamps is associated with each word of the set of words.

9. The method of claim 8, wherein determining the set of audio portions of the audio data, comprises:
for the each value of the set of values, determining one or more words of the set of words associated with the each value in the transcription array;
identifying a start timestamp of the set of timestamps for a first word in the one or more words;
identifying an end timestamp of the set of timestamps for a last word in the one or more words; and
identifying, in the audio data, the audio portion comprising the audio data from the start timestamp until the end timestamp.

10. The method of claim 9, wherein determining the set of transcript portions, comprises:
for each transcript portion in the set of transcript portions, identifying, in the transcript, the one or more words of the set of words associated with the value in the transcript array.

11. The method of any of claims 6 to 10, further comprising receiving, from the user via a recording function associated with the UI, the audio data comprising information for populating the form; and for example populating the form based on the audio data; wherein populating the form based on the audio data may comprise: determining, based on the audio data, the set of values for the set of data field; and populating each data field of the set of data fields on the form with a corresponding value of the set of data fields.

12. A method, comprising:
displaying, on a user interface (UI):
a fillable form comprising a set of data fields and a set of values, wherein each value of the set of values is associated with a data field of the set of data fields;
an audio recording function configured to receive audio data; and
an audio playing function configured to play audio portions;
receiving, from a user via the audio recorder, the audio data comprising information for populating the fillable form;
populating the fillable form based on the information,;
receiving a verification request for the fillable form;
receiving a set of audio portions of the audio data, each audio portion of the set of audio portions associated with a respective value of the set of values;
receiving a set of transcript portions, each transcript portion corresponding to a respective audio portion of the set of audio portions; and
playing, with an audio player function, the set of audio portions; and
while playing, displaying, on the UI, the set of transcript portions.

13. The method of claim 12, further comprising:
receiving, a set of visual indicators,
wherein each visual indicator in the set of visual indicators is associated with a respective value of the set of values and a corresponding audio portion of the set of audio portions.

14. The method of claim 13, further comprising while playing, displaying, on the UI, each respective visual indicator on the fillable form.

15. The method of claim 12, 13 or 14, wherein displaying, on the UI, the set of transcript portions comprises:
displaying, on the UI, a set of words associated with a transcript portion of the set of transcript portions, the set of words transcribing the respective audio portion of the set of audio portions; and
displaying, on the UI, a paired timestamp corresponding to the respective audio portion of the set of audio portions, wherein the paired timestamp comprises a start timestamp associated with a start of the respective audio portion and an end timestamp associated with an end of the respective audio portion.
